(19) Europäisches Patentamt
European Patent Office
Office européen des brevets

(11) EP 4 641 807 A1

(12) EUROPEAN PATENT APPLICATION
published in accordance with Art. 153(4) EPC

(43) Date of publication:
**29.10.2025 Bulletin 2025/44**

(21) Application number: **24791679.4**

(22) Date of filing: **16.01.2024**

(51) International Patent Classification (IPC):
***H01M 50/46*** *(2021.01)* ***H01M 50/414*** *(2021.01)*
***H01M 10/0525*** *(2010.01)*

(52) Cooperative Patent Classification (CPC):
Y02E 60/10

(86) International application number:
**PCT/CN2024/072427**

(87) International publication number:
**WO 2024/217091 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.04.2023 CN 202310410916**
**03.11.2023 CN 202311457178**

(71) Applicant: **Contemporary Amperex Technology Co., Limited**
**Ningde, Fujian 352100 (CN)**

(72) Inventors:
- **JIN, Haizu**
**Ningde, Fujian 352100 (CN)**
- **PENG, Shuangjuan**
**Ningde, Fujian 352100 (CN)**
- **PENG, Lin**
**Ningde, Fujian 352100 (CN)**
- **LI, Baiqing**
**Ningde, Fujian 352100 (CN)**
- **ZHAO, Fenggang**
**Ningde, Fujian 352100 (CN)**
- **WU, Kai**
**Ningde, Fujian 352100 (CN)**

(74) Representative: **Gong, Jinping**
**CocreateIP**
**Neumarkter Straße 21**
**81673 München (DE)**

# (54) BATTERY CELL, BATTERY AND ELECTRICAL APPARATUS

(57) The present application relates to a battery cell, a battery, and an electrical apparatus. The battery cell comprises an electrode assembly, the electrode assembly comprising a first electrode plate, a second electrode plate and a separator. The polarities of the first electrode plate and the second electrode plate are opposite, and the separator is arranged between the first electrode plate and the second electrode plate. At least one of the first electrode plate, the second electrode plate and the separator comprises a swelling polymer, the swelling polymer satisfying: $300\% \leq m_2/m_1 \leq 10000\%$, and $m_3/m_2 \leq 50\%$.

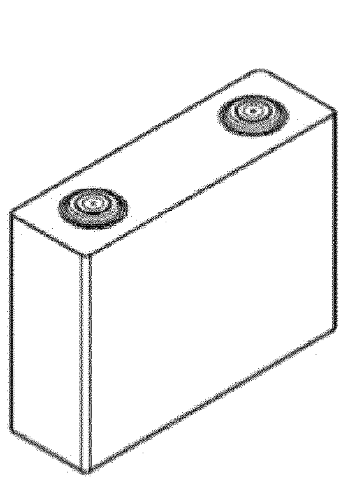


FIG. 1

EP 4 641 807 A1

## Description

### CROSS-REFERENCE TO RELATED APPLICATIONS

The present application claims priority to Chinese Patent Application No. 202311457178.4 filed on November 03, 2023 and entitled "BATTERY CELL, BATTERY AND ELECTRICAL APPARATUS", the entire content of which is incorporated herein by reference.

### TECHNICAL FIELD

The present application relates to the technical field of batteries, in particular to a battery cell, a battery and an electrical apparatus.

### BACKGROUND

Because of the characteristics of a high capacity, a long service life and the like, battery cells are widely used in electronic devices, such as mobile phones, laptops, electromobiles, electric cars, electric airplanes, electric ships, electric toy cars, electric toy ships, electric toy airplanes, and electric tools.

With the increasingly wide application range of batteries, the requirements for the performance of the battery cells become increasingly stringent. In order to improve the performance of the battery cells, the battery cells are usually optimized and improved. However, the use reliability and cycle performance of the battery cells are still poor.

### SUMMARY OF THE INVENTION

The present application is conducted in view of the above problems, and aims to provide a battery cell, a battery and an electrical apparatus.

in a first aspect, the present application provides a battery cell, the battery cell includes an electrode assembly, the electrode assembly includes a first electrode plate, a second electrode plate and a separator, the polarity of the first electrode plate is opposite to the polarity of the second electrode plate, the separator is arranged between the first electrode plate and the second electrode plate, at least one of the first electrode plate, the second electrode plate and the separator includes a swelling polymer, and the swelling polymer satisfies: $300\% \leq m_2/m_1 \leq 10000\%$; and $m_3/m_2 \leq 50\%$,
wherein
the swelling polymer is prepared as a rubber film, and the rubber film has a mass of $m_1$ g, a width of 10 mm, a length of 10 mm and a thickness of 1 mm;
the rubber film is added into an excessive amount of dimethyl carbonate (DMC), and after standing for 7 days at 25°C, a first swollen rubber film is obtained which has a mass of $m_2$ g; and
the first swollen rubber film is put in an atmosphere with a humidity less than or equal to 20%, and after standing for 7 days at 25°C, a dry rubber film is obtained which has a mass of $m_3$ g.

Therefore, the swelling polymer of the embodiment of the present application can lock an electrolyte in the swelling polymer by physical adsorption through its own liquid locking and releasing capabilities when satisfying $300\% \leq m_2/m_1 \leq 10000\%$; and $m_3/m_2 \leq 50\%$. The electrolyte can be locked on surfaces of the active substance particles to form a slow-release storage point to release the electrolyte into the electrode assembly, thereby relieving the electrolyte deficiency phenomenon, so that the electrolyte continuously infiltrates a surface of an active substance during a cyclic charge and discharge process of the battery cell; and on the basis of protecting an interface of the active substance, active ions may also be smoothly transmitted, thereby establishing an interface protection, reducing side reactions at a solid-liquid interface, and improving high-temperature storage performance, use reliability and cycle performance of the battery cell.

In some embodiments, $500\% \leq m_2/m_1 \leq 5000\%$. When the embodiments of the present application meet the above range, the use reliability and cycle performance of the battery cell may be further improved.

In some embodiments, the swelling polymer satisfies at least two of the following conditions,

(1) the rubber film is subjected to a dynamic frequency scanning test at $T_m$+20°C to obtain the elastic modulus G'-loss modulus G" curve, wherein the slope of the elastic modulus G'-loss modulus G" curve is K, 0.5<K<5, and Tm represents the melting temperature of the rubber film;
(2) the crystallinity of the swelling polymer measured through a differential scanning calorimetry is Xc, 0<Xc≤30%; and

the glass-transition temperature of the swelling polymer is $T_g$, $T_g \leq 25°C$; and
(3) the elastic modulus of the rubber film is E, E≤1 MPa; and the elongation at break of the rubber film is ε, ε≥100%.

When the embodiments of the present application meet the above range, the liquid locking and releasing capabilities of the swelling polymer can be improved, and the use reliability and cycle performance of the battery cell can be further improved.

In some embodiments, the rubber film is added into a preset electrolyte, and standing is performed for ≥24h at 25°C to obtain a second swollen rubber film, wherein the preset electrolyte includes dimethyl carbonate (DMC), ethyl methyl carbonate (EMC), ethylene carbonate (EC) and lithium hexafluorophosphate ($LiPF_6$), the dimethyl carbonate, the ethyl methyl carbonate and the ethylene carbonate have the same mass, and the lithium hexafluorophosphate ($LiPF_6$) has a molar amount of 1 mol/L; and

the rubber film has a Shore hardness of $H_{a1}$, the second swollen rubber film has a Shore hardness of $H_{a2}$, and the rubber film and the second swollen rubber film satisfy: $0 \leq H_{a2}/H_{a1} \leq 0.5$, and $0 \leq H_{a2} \leq 45$.

Optionally, $0 \leq H_{a2}/H_{a1} \leq 0.45$.

Further optionally, $20 \leq H_{a1} \leq 100$.

Therefore, in the embodiment of the present application, the swelling polymer may be arranged in at least one of the first electrode plate and the second electrode plate. A film layer of the first electrode plate is of a porous structure. For example, there are pores between the active substance particles to form the porous structure. The swelling polymer may be dispersed in the porous structure of the first electrode plate. On the one hand, the swelling polymer may rely on the porous structure as a support to form a liquid-retaining network, thereby achieving a liquid-locking effect while improving interface performance of the active substance particles, a transmission rate of lithium ions can be increased, interface side reactions of the active substance layer can be reduced, and the cycle performance of the battery cell can be improved. On the other hand, the swelling polymer swells after contacting the electrolyte, and its mechanical strength is reduced. During the cyclic charge and discharge process of the battery cell, it can effectively adapt to the expansion deformation of the active substance particles during the charge and discharge process, and can more effectively adhere to surfaces of the active substance particles, thereby reducing problems such as solid-liquid interface debonding caused by swelling and forming a gel-like substance.

In some embodiments, the swelling polymer includes a fluoropolymer, and the fluoropolymer includes at least one of a compound represented by Formula (AI) to a compound represented by Formula (AIII),

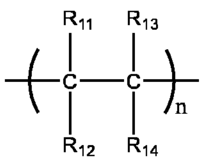 Formula (AI) and 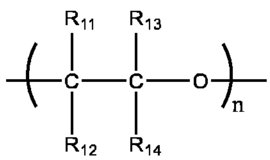 Formula (AII),

in Formula (AI) and Formula (AII), $R_{11}$, $R_{12}$, $R_{13}$ and $R_{14}$ each independently include a hydrogen atom, a fluorine atom, a chlorine atom, a substituted or unsubstituted C1-C3 alkyl group or a substituted or unsubstituted C1-C3 alkoxy group, and at least one of $R_{11}$, $R_{12}$, $R_{13}$ and $R_{14}$ includes a fluorine atom; when substituted, a substituent group includes one or more of a nitrile group (-CN), a nitro group, a sulfonic acid group, a sulfonyl group, amide, a carboxyl group, an ester group, and a halogen atom;

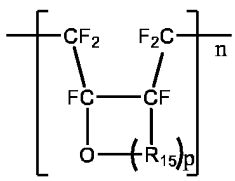 Formula (AIII);

in Formula (AIII), $R_{15}$ includes a single bond, a substituted or unsubstituted C1-C3 alkyl group; when substituted, a substituent group includes one or more of a nitrile group (-CN), a nitro group, a sulfonic acid group, a sulfonyl group, amide, a carboxyl group, an ester group, and a halogen atom; and
p is any positive integer selected from 1 to 3.

In some embodiments, the swelling polymer includes an ether polymer, the ether polymer includes a compound represented by Formula (BI) and/or a compound represented by Formula (BII),

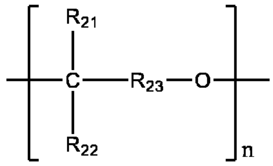 Formula (BI);

in Formula (BI), $R_{21}$ and $R_{22}$ each independently include a hydrogen atom, a substituted or unsubstituted C1-C3 alkyl group, or a substituted or unsubstituted C1-C3 alkoxy group; $R_{23}$ includes a substituted or unsubstituted C1-C5 alkylene,

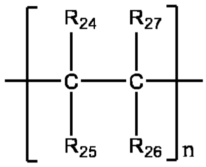 Formula (BII);

and

in Formula (BII), $R_{24}$ to $R_{27}$ each independently include a hydrogen atom, a substituted or unsubstituted C1-C3 alkyl group, a substituted or unsubstituted C1-C3 alkoxy group or ether group, and at least one of $R_{24}$ to $R_{27}$ includes a substituted or unsubstituted C1-C3 alkoxy group or ether group;

In some embodiments, the swelling polymer includes an ester polymer, the ester polymer includes a compound represented by Formula (CI) to a compound represented by Formula (CIII), and

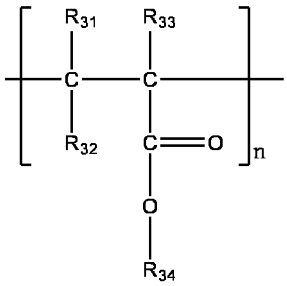 Formula (CI);

in Formula (CI), $R_{31}$, $R_{32}$ and $R_{33}$ each independently include a hydrogen atom, or a substituted or unsubstituted C1-C8 alkyl group; $R_{34}$ includes a substituted or unsubstituted C1-C8 alkyl group, or a substituted or unsubstituted C1-C8 hydroxyalkyl group,

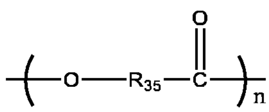 Formula (CII);

in Formula (CII), $R_{35}$ includes a substituted or unsubstituted C2-C6 methylene; optionally, $R_{35}$ independently includes a substituted or unsubstituted C2-C4 methylene;

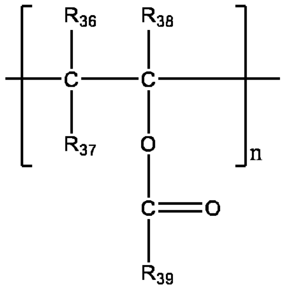

Formula (CIII),

and

in Formula (CIII), $R_{36}$, $R_{37}$ and $R_{38}$ each independently include a hydrogen atom, or a substituted or unsubstituted C1-C8 alkyl group; $R_{39}$ includes a substituted or unsubstituted C1-C8 alkyl group; and

Optionally, $R_{36}$, $R_{37}$ and $R_{38}$ each independently include a hydrogen atom, and a substituted or unsubstituted C1-C4 alkyl group.

In some embodiments, the swelling polymer includes an aldehyde ketone polymer, the aldehyde ketone polymer includes a compound represented by Formula (DI) and/or a compound represented by Formula (DII), and

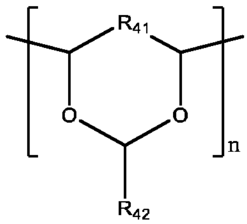

Formula (DI);

in formula (DI), $R_{41}$ includes a single bond, and a substituted or unsubstituted C1-C6 methylene; $R_{42}$ includes a hydrogen atom, and a substituted or unsubstituted C1-C6 alkyl group;

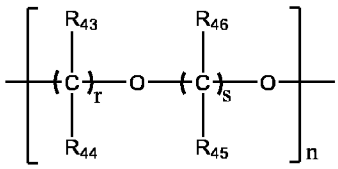

Formula (DII);

in formula (DII), $R_{43}$ to $R_{46}$ each independently include a hydrogen atom, a hydroxyl group, a substituted or unsubstituted C1-C3 alkyl group, a substituted or unsubstituted C1-C3 hydroxyalkyl group, or a substituted or unsubstituted C1-C3 alkoxy group; r and s each independently are integers selected from 0 to 5, and at least one of r or s is selected from any positive integer; and

In some embodiments, the first electrode plate includes a current collector and a film layer arranged on at least one surface of the current collector, and the film layer includes the swelling polymer and active substance particles.

In some embodiments, the film layer includes a polymer layer including the swelling polymer and an active substance layer including the active substance particles, the active substance layer is arranged on at least one surface of the current collector, and the polymer layer is arranged on a surface of the active substance layer facing away from the current collector; and/or

In some embodiments, a plurality of active substance particles are arranged, a pore exists between every two adjacent active substance particles, and the swelling polymer is distributed in the pores.

In some embodiments, the separator includes a base material and a coating arranged on at least one surface of the base material;

In some embodiments, the swelling polymer is distributed in the pores of the base material.

In some embodiments, the swelling polymer is distributed in the coating.

In some embodiments, the swelling polymer is arranged on a surface of the coating facing away from the base material.

In some implementations, the battery cell further includes a liquid electrolyte, and the liquid electrolyte is located in the electrode assembly.

In some embodiments, the battery cell satisfies: $(m/\rho)/V_{total\ porosity} \geq 80\%$;

$V_{total\ porosity}$ represents a numerical value of a pore volume of the electrode assembly and has a unit of mL;
m represents a numerical value of a difference between a mass of the battery cell before drying and a mass of the battery cell after drying and has a unit of g; and
$\rho$ represents a numerical value of density of the liquid electrolyte and has a unit of g/mL.

Therefore, when the battery cell of the embodiment of the present application satisfies the above conditions, most of the liquid electrolyte is located in the pore structure of the electrode assembly, that is, the electrode assembly itself has good liquid absorption and liquid retaining capabilities, which is conducive to the transmission of active ions and improves dynamic performance of the battery cell; a small portion of the liquid electrolyte may diffuse into the swelling polymer and release during the cyclic charge and discharge process of the battery cell. Since the amount of released liquid is relatively small, the liquid electrolyte is not prone to flowing out of the electrode assembly, and the electrolyte can infiltrate the electrode assembly more uniform, thereby improving the cycle performance of the battery cell.

In some embodiments, the battery cell satisfies:

$$0 \leq y/Ah \leq 15\%;$$

y represents a numerical value of a volume of a free electrolyte in the battery cell and has a unit of mL; and
Ah represents a numerical value of a nominal capacity of the battery cell and has a unit of Ah.

Therefore, when the battery cell of the embodiment of the present application satisfies the above conditions, a content of the free electrolyte in the battery cell is extremely small, or even the free electrolyte is basically not contained in the battery cell, thereby significantly improving the use reliability and cycle performance of the battery cell.

In some embodiments, the battery cell satisfies:

$$0 \leq y/V_{total\ porosity} \leq 15\%;$$

y represents the numerical value of the volume of the free electrolyte in the battery cell and has a unit of mL; and
$V_{total\ porosity}$ represents the numerical value of the pore volume of the electrode assembly and has a unit of mL.

Therefore, when the battery cell of the embodiment of the present application satisfies the above conditions, the content of the free electrolyte in the battery cell is extremely small, or even the free electrolyte is basically not contained in the battery cell, thereby significantly improving the use reliability and cycle performance of the battery cell.

In some embodiments, the battery cell, after being subjected to a linear sweep frequency vibration test, is charged to a 100% state-of-charge (SOC), a hole is formed in the battery cell and arranged at a lowest position in a vertical direction, a volume of the liquid electrolyte flowing out of the battery cell is recorded as M1, 0 mL≤M1≤0.5 mL, and optionally, M1 is 0 mL;
wherein

a vibration direction of the linear sweep frequency vibration test is: single up-and-down vibration;
a vibration frequency of the linear sweep frequency vibration test is: 10 Hz to 55 Hz;
a maximum accelerated velocity of the linear sweep frequency vibration test is: 30 $m/s^2$;
the number of sweep frequency cycles of the linear sweep frequency vibration test is: 10; and
vibration time of the linear sweep frequency vibration test is: 3 h.

Therefore, when the battery cell of the embodiment of the present application satisfies the above conditions, the content of the free electrolyte in the battery cell is extremely small, or even the free electrolyte is basically not contained in the battery cell, thereby significantly improving the use reliability and cycle performance of the battery cell.

In some embodiments, after the battery cell is subjected to the linear sweep frequency vibration test, the electrode assembly is taken out, after the electrode assembly is subjected to an extrusion test, a volume of an electrolyte flowing out of the electrode assembly is recorded as M2, 0 mL≤M2≤0.5 mL, and optionally, M2 is 0 mL;
wherein

an extrusion direction of the extrusion test is perpendicular to a thickness direction of the electrode assembly; and an extrusion degree of the extrusion test is: an extrusion force being 0.35 MPa.

Therefore, when the battery cell of the embodiment of the present application satisfies the above conditions, after the battery cell is subjected to extrusion, the content of the free electrolyte in the battery cell is extremely small, or even the free electrolyte is basically not contained in the battery cell, thereby significantly improving the use reliability and cycle performance of the battery cell.

In a second aspect, the present application provides a battery, including the battery cell according to any embodiment in the first aspect of the present application.

In a third aspect, the present application provides an electrical apparatus, including the battery according to any embodiment in the second aspect of the present application.

**BRIEF DESCRIPTION OF DRAWINGS**

In order to explain technical solutions of the embodiments of the present application more clearly, a brief introduction of accompanying drawings to be used in the embodiments of the present application will be made below. Apparently, the accompanying drawings described below are merely some embodiments of the present application, and other drawings may also be obtained according to these accompanying drawings by those ordinarily skilled in the art without creative efforts.

FIG. 1 is a schematic diagram of an embodiment of a battery cell of the present application.
FIG. 2 is a schematic exploded view of the embodiment of the battery cell in FIG. 1;
FIG. 3 is a schematic view of an embodiment of a battery module of the present application;
FIG. 4 is a schematic view of an embodiment of a battery pack of the present application;
FIG. 5 is a schematic exploded view of the embodiment of the battery pack as shown in FIG. 4;
FIG. 6 is a schematic diagram of an embodiment of an electrical apparatus including a battery cell of the present application as a power source.

The accompanying drawings may not be drawn according to an actual scale.

Description of reference numerals:

1, Battery pack; 2, Upper box body; 3, Lower box body; 4, Battery module;
5, Battery cell; 51, Case; 52, Electrode assembly;
53, Cover plate;
6, Electrical apparatus.

**DETAILED DESCRIPTION**

Embodiments of a battery cell, a battery, and an electrical apparatus of the present application are specifically disclosed below with appropriate reference to the detailed description of the accompanying drawings. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be

combined with each other to form new technical solutions.

Unless otherwise specified, all technical features and optional technical features of the present application may be combined with each other to form new technical solutions.

If not specifically stated, all steps of the present application may be performed sequentially or randomly, preferably sequentially. For example, a method includes steps (a) and (b), meaning that the method may include steps (a) and (b) performed sequentially, or may include steps (b) and (a) performed sequentially. For example, the reference to the fact that the method may further include step (c), meaning that step (c) may be added to the method in any order. For example, the method may include steps (a), (b) and (c), or may further include steps (a), (c) and (b), or may further include steps (c), (a) and (b), and the like.

The battery cell includes an electrode assembly and an electrolyte. The electrode assembly includes a positive electrode plate, a negative electrode plate, and a separator. The separator is arranged between the positive electrode plate and the negative electrode plate, and plays a main role in preventing the positive electrode plate and the negative electrode plate from short-circuiting, and meanwhile active ions may be caused to freely pass to form a loop.

During the cyclic charge and discharge process of the battery cell, the volume of the electrode assembly may change (such as expansion deformation) due to the fact that the active ions are embedded into or separated from an active material, resulting in that the electrolyte infiltrated in the electrode assembly may be continuously squeezed out. The squeezed-out electrolyte may not be completely absorbed back into the electrode assembly, so a phenomenon of electrolyte bridge break occurs in the electrode assembly. Due to the electrolyte bridge break, an active substance cannot be fully infiltrated, and the local lack of liquid in the active substance makes it impossible to cyclically charge and discharge in this region, so the dynamic performance will deteriorate sharply, metal precipitation at an interface is caused, and a risk of occurrence of dendritic crystals is increased. As the dendritic crystals grow, the dendritic crystals may pierce the separator, then the positive electrode plate and the negative electrode plate are caused to short-circuit, thereby degrading the use reliability and cycle performance of the battery cell.

In view of the above problems, the present application provides a battery cell. A swelling polymer is added to an electrode assembly. After the swelling polymer makes contact with an electrolyte, the electrolyte can be locked between the polymer molecular chains by physical adsorption, and the electrolyte can also be released into the electrode assembly, thereby relieving an electrolyte deficiency phenomenon, reducing side reactions at a solid-liquid interface, and improving the use reliability and cycle performance of the battery cell. Embodiments of the present application are described in detail below.

## Battery cell

In a first aspect, the present application provides a battery cell, the battery cell includes an electrode assembly, the electrode assembly includes a first electrode plate, a second electrode plate and a separator, the polarity of the first electrode plate is opposite to the polarity of the second electrode plate, and the separator is arranged between the first electrode plate and the second electrode plate; and at least one of the first electrode plate, the second electrode plate and the separator includes a swelling polymer,
wherein

the swelling polymer is prepared as a rubber film, and the rubber film has a mass of $m_1$ g, a width of 10 mm, a length of 10 mm and a thickness of 1 mm;
the rubber film is added into an excessive amount of dimethyl carbonate (DMC), and after standing for 7 days at 25°C, a first swollen rubber film is obtained which has a mass of $m_2$ g; and
the first swollen rubber film is put in an atmosphere with a humidity less than or equal to 20%, and after standing for 7 days at 25°C, a dry rubber film is obtained which has a mass of $m_3$ g; and
the swelling polymer satisfies: $300\% \leq m_2/m_1 \leq 10000\%$; and $m_3/m_2 \leq 50\%$.

In the embodiments of the present application, the swelling polymer includes a variety of materials, such as a polymer that is solid at a room temperature (for example, 0 to 45°C.), or a polymer that is liquid at the room temperature. Polymers in different forms may be prepared as the rubber film using different methods.

Specifically, the polymer that is solid at the room temperature can be dissolved in a solvent. For example, 10 g of the polymer is dissolved in 90 g of N-methylpyrrolidone (NMP), stirred at 1200 rpm for 2 h, and then dried at 130°C for ≥ 8 h to obtain a polymer film. A polymer film with a width of 10 mm, a length of 10 mm, anda thickness of 1 mm is used as the rubber film. Dissolution refers to a process in which a solute and a solvent are mixed into a uniform phase. The polymer can be dissolved in the solvent, which may generally be understood as the solubility of the polymer in the solvent being greater than 10 g.

The polymer that is solid at the room temperature is basically insoluble in the solvent. 10 g of the polymer is taken and pressed into a 1 mm solid polymer film at (a melting point $T_m$+ 20°C). In particular, for polymers that can neither be

dissolved nor melted, a suitable softening temperature may be selected between Tg and Tb (Tb is a decomposition temperature of the polymer) for processing. The specific process of pressing is: the polymer is vacuum dried at 80°C for 12 h. The dried polymer is hot pressed into a thin sheet by a flat vulcanizer. A hot pressing temperature is set to ($T_m$+20°C), a calendering thickness is 1 min to 2 min, calendering time is 2 min, and a pressure is 8 MPa. After calendering for 2 min, a sample is taken out and placed on another vulcanizer of the same model for cold pressing at a cold-pressing pressure of 10 MPa. A fixed-size rubber film may be obtained by using a square mold of 10 cm times 10 cm. The polymer cannot be dissolved in the solvent, which may generally be understood as the polymer being difficult to dissolve in the solvent, and having a solubility in the solvent of less than 0.01 g.

An appropriate amount of a sample of the polymer that is liquid at the room temperature is taken and dried at a boiling point of a solvent such as NMP for ≥8h to obtain a polymer film. A thickness of the polymer film is related to a solid content of a liquid and a total height of a liquid before drying. A liquid with a solid content of 50% may be prepared, poured into a solid container for a 2 mm height, and then dried to obtain a rubber film of 2 mm×50%=1 mm.

The rubber film is added into an excessive amount of dimethyl carbonate (DMC) (a mass ratio of the rubber film to the DMC is 1:100). The excessive amount means that after the first swollen rubber film is obtained by adding the rubber film into the dimethyl carbonate (DMC) and stilling standing for 7 days at 25°C, free dimethyl carbonate (DMC) is still contained.

The rubber film has a swelling property, that is, the rubber film may absorb the DMC in the DMC and expand in volume. $m_2$ is a mass of the rubber film after absorbing the DMC. $m_2/m_1$ may represent a liquid absorption capability of the rubber film, thereby representing the liquid absorption capability of the swelling polymer. Therefore, $m_2/m_1$ may be defined as a liquid absorption amount of the rubber film. When $300\% \leq m_2/m_1 \leq 10000\%$, the swelling property of the swelling polymer is good, which is conducive to absorbing and locking the liquid electrolyte in the swelling polymer, playing a role in liquid retaining. A mass of the free electrolyte in the battery cell is less or even zero. As the mass of the free electrolyte decreases, the risk of the problem of the use reliability caused by liquid leakage of the battery cell is lower, and the use reliability and cycle performance of the battery cell may be improved.

The first swollen rubber film is dried in a relatively dry environment (an atmosphere where a humidity is less than or equal to 20%), a solvent in the first swollen rubber film is released step by step, $m_3$ is a mass of the first swollen rubber film after drying, and $m_3/m_2$ may represent a liquid releasing capability of the rubber film, thereby representing a liquid releasing capability of the swelling polymer, and thus $m_3/m_2$ may be defined as a liquid releasing amount of the rubber film. When $m_3/m_2 \leq 50\%$, the swelling polymer has a better capability of releasing the liquid electrolyte. During the cyclic charge and discharge process of the battery cell, the liquid electrolyte locked by the swelling polymer may be released and released inside the electrode assembly, and the liquid infiltration performance of a liquid-deficient position in the electrode assembly is supplemented in time, so that the overall infiltration performance in the electrode assembly can be more uniform, the side reaction at the solid-liquid interface can be reduced, and the use reliability and cycle performance of the battery cell can be improved.

The swelling polymer of the embodiment of the present application can lock the electrolyte in the swelling polymer by physical adsorption through its own liquid locking and releasing capabilities when satisfying $300\% \leq m_2/m_1 \leq 10000\%$; and $m_3/m_2 \leq 50\%$. The electrolyte can be locked on surfaces of the active substance particles to form a slow-release storage point to release the electrolyte into the electrode assembly, thereby relieving the electrolyte deficiency phenomenon, so that the electrolyte continuously infiltrates a surface of an active substance during the cyclic charge and discharge process of the battery cell; and on the basis of protecting an interface of the active substance, active ions may also be smoothly transmitted, thereby establishing an interface protection, reducing the side reactions at the solid-liquid interface, and improving high-temperature storage performance, use reliability and cycle performance of the battery cell.

In some embodiments, $500\% \leq m_2/m_1 \leq 5000\%$. When the embodiment of the present application satisfies the above range, the high-temperature storage performance, use reliability and cycle performance of the battery cell can be further improved.

Exemplarily, $m_2/m_1$ may be 300%, 400%, 500%, 600%, 800%, 1000%, 1200%, 1400%, 1500%, 1600%, 1800%, 2000%, 2200%, 2400%, 2500%, 2600%, 2800%, 3000%, 3200%, 3300%, 3400%, 3500%, 3600%, 3700%, 3800%, 3900%, 4000%, 4200%, 4500%, 4600%, 4700%, 4800%, 4900%, 5000%, or a range composed of any two of the above numerical values.

Optionally, $0<m_3/m_2 \leq 50\%$. Exemplarily, $m_3/m_2$ may be 50%, 49%, 48%, 45%, 42%, 40%, 39%, 38%, 35%, 32%, 30%, 29%, 28%, 25%, 23%, 22%, 20%, 19%, 18%, 15%, 14%, 13%, 11%, 10%, 8%, 7%, 6%, 5%, 3%, 2%, 1%, or a range composed of any two of the above numerical values.

In order to further improve the liquid locking and releasing capabilities of the swelling polymer, the swelling polymer may be further selected, for example, its physical and chemical properties may be further selected, so as to select a swelling polymer with excellent properties.

In some embodiments, the rubber film is subjected to a dynamic frequency scanning test at $T_m$+20°C to obtain the elastic modulus G'-loss modulus G" curve, and the slope of the elastic modulus G'-loss modulus G" curve is K, 0.5<K<5; and $T_m$ represents the melting temperature of the rubber film. In particular, for the polymer that can neither be dissolved nor melted, a suitable softening temperature may be selected between $T_g$ and $T_b$ ($T_b$ is a decomposition temperature of the

polymer) for testing.

According to a conclusion of classical linear viscoelasticity, for a polymer, especially a linear polymer, the elastic modulus G'-loss modulus G" in a terminal region (an interval range approaching a maximum value of an angular velocity) of the elastic modulus G'-loss modulus G" curve conforms to the frequency dependence, and a longest chain of the polymer plays a role in a viscoelastic behavior.

Specific steps of the dynamic frequency scanning test are as follows: a TA-AR2000EX rotational rheometer (TAinstruments, USA) is used for performing the dynamic frequency scanning test, and parallel plates have a diameter of 25 mm and a thickness of 0.9 mm. To ensure that the test is conducted in a linear viscoelastic region, the strain during the dynamic frequency scanning test is 2%, a test temperature is $T_m$+20°C, and the frequency scanning range of the test is: 500 rad/s≤$w^2$≤0.05 rad/s, so as to obtain data of a low-frequency region as much as possible.

The dynamic frequency scanning test may represent a degree of entanglement of molecular chains under solid phase melting (melt state). When the swelling polymer of the embodiment of the present application satisfies the above range, the swelling polymer presents a low cross-linked network structure. The cross-linking degree is beneficial for the swelling polymer to achieve continuous swelling and liquid absorption capability, and improve the stability of a liquid storage space of the swelling polymer, which is conducive to improving the cycle performance of the battery cell.

Exemplarily, K may be 0.51, 0.6, 0.7, 0.8, 0.9, 1, 1.2, 1.5, 1.8, 2, 2.2, 2.5, 3, 3.5, 4, 4.5, 4.95, or a range composed of any two of the above numerical values.

In some embodiments, the crystallinity of the swelling polymer measured through a differential scanning calorimetry is Xc, and 0<Xc≤30%.

Crystallization refers to a process in which atoms, ions or molecules in a material are arranged in a certain spatial order to form an orderly structure. The conformation of the polymer in the crystallization is determined by both intramolecular and intermolecular factors. The intermolecular force will affect a packing density between molecular chains. The crystallinity Xc is used to represent the degree of crystallinity in the material, which may be measured by the differential scanning calorimetry (DSC). Specifically, the test steps are: 0.5g to 0.8g of sample is taken and placed in a carrier crucible, subjected to temperature rise and decrease treatments in a nitrogen atmosphere, and heated from an initial temperature 20°C lower than intrinsic $_{Tg}$ of the material to a cutoff temperature 20°C higher than intrinsic$_{Tm}$ of the material at a heating rate of 10°C/min, and an actual glass-transition temperature $T_g$ and the melting temperature $T_m$ of the material are determined according to endothermic and exothermic peaks or a transition point of the material in the process.

When the crystallinity of the swelling polymer is within the above range, the crystallinity is relatively low, the polymer molecular chains tend to be loosely arranged, an interaction force between the molecular chains is small, and adjacent molecular chains are easily opened, which is conducive to making the liquid electrolyte enter between the polymer molecular chains, thereby improving the liquid absorption and releasing capabilities of the swelling polymer and further improving the cycle performance of the battery cell.

Exemplarily, the crystallinity $X_C$% of the swelling polymer measured through the differential scanning calorimetry may be 1%, 2%, 5%, 10%, 15%, 20%, 25%, 30%, or a range composed of any two of the above numerical values.

In some embodiments, the glass-transition temperature of the swelling polymer is $T_g$, and $T_g$≤25°C; and optionally, - 60°C≤$T_g$≤25°C.

The glass-transition temperature is a transition temperature of the polymer chain segments from freezing to movement. When an ambient temperature is higher than $T_g$, the polymer chain segments enter a moving state with strong mobility. When the glass-transition temperature of the swelling polymer is within the above range, the polymer chain segments have a certain mobility, so that the polymer may gradually adapt to a volume deformation caused by the entry of the liquid electrolyte and is not prone to a destructive deformation; the polymer chain segments have a certain mobility, which makes a room for the diffusion entry of the liquid electrolyte; and a network structure inside the polymer has strong flexibility, which is conducive to improving the swelling and liquid absorption capability of the swelling polymer, and further improving the cycle performance of the battery cell.

Exemplarily, the glass-transition temperature of the swelling polymer may be -60°C, -30°C, -20°C, -10°C, 0°C, 5°C, 10°C, 15°C, 20°C, 25°C, or a range composed of any two of the above numerical values.

In some embodiments, the elastic modulus of the rubber film is E, E≤1 MPa; and optionally, 0.01 MPa≤E≤1 MPa.

When the elastic modulus of the rubber film is within the above range, elastic strength of the rubber film is low, and a yield deformation may occur under a relatively low external force, which means that the molecular chain segments of the swelling polymer are more likely to rearrange under the action of external force. When the swelling polymer is immersed in the liquid electrolyte, the liquid electrolyte can solvate the molecular chain segments with a relatively low energy barrier, making it easier to enter the swelling polymer.

Exemplarily, the elastic modulus of the rubber film may be 1 MPa, 0.9 MPa, 0.8 MPa, 0.7 MPa, 0.6 MPa, 0.5 MPa, 0.4 MPa, 0.3 MPa, 0.2 MPa, 0.1 MPa, 0.05 MPa, 0.02 MPa, 0.01 MPa, or a range composed of any two of the above numerical values.

In the embodiments of the present application, the elastic modulus has a meaning well known in the art and may be tested by using equipment and instruments well known in the art. For example, a Shimadzu tensile testing machine

AGS-X is used to conduct a mechanical property test of polymer ink addition and test a stress-strain curve of the rubber film. According to the national standard GB/T 1040.3-2006, the sample is cut into strips of about 5 mm in width and about 50 mm in length (a thickness of the rubber film is controlled between 1 mm and 2 mm), and a tensile property is measured at a tensile rate of 50 mm/min. Elastic modulus E = stress max/(width * thickness), and elongation at break = strain/length.

In some embodiments, the elongation at break of the rubber film is $\varepsilon$, and $\varepsilon \geq 100\%$. Optionally, $100\% \leq \varepsilon \leq 2000\%$.

When the elongation at break of the rubber film is within the above range, it is conducive to continuous tensile deformation, which means that the network structure inside the swelling polymer is more resilient and has more deformation space. Under the action of external force, the molecular chain segments may be continuously rearranged, more liquid electrolyte may be absorbed during the swelling process, and the network structure is kept relatively stable through the movement of the chain segments during the swelling process, thus forming a stable liquid storage space. For a polymer with the same cell type and composition ratio, the higher the elongation at break is, the stronger the corresponding swelling and liquid absorption capability of the polymer are.

Exemplarily, the elongation at break $\varepsilon$ of the rubber film may be 100%, 105%, 110%, 120%, 130%, 140%, 150%, 160%, 170%, 180%, 190%, 200%, 220%, 240%, 250%, 270%, 280%, 300%, 320%, 350%, 400%, 450%, 480%, 500%, 600%, 700%, 800%, 900%, 1000%, 1500%, 2000%, or a range composed of any two of the above numerical values.

In the embodiments of the present application, the elongation at break has a meaning well known in the art and may be tested by using equipment and instruments well known in the art. For example, a Shimadzu tensile testing machine AGS-X is used to conduct a mechanical property test of the rubber film and test a stress-strain curve of the rubber film. According to the national standard GB/T 1040.3-2006, a sample of the rubber film is cut into strips of about 5 mm in width and about 50 mm in length (a thickness of the rubber film is controlled between 1 mm and 2 mm), and a tensile property is measured at a tensile rate of 50 mm/min, to obtain the elongation at break of the rubber film by testing.

In some embodiments, the rubber film is added into the preset electrolyte, and a second swollen rubber film is obtained by standing for ≥24h at 25°C. The preset electrolyte includes dimethyl carbonate (DMC), ethyl methyl carbonate (EMC), ethylene carbonate (EC) and lithium hexafluorophosphate ($LiPF_6$). The dimethyl carbonate, the ethyl methyl carbonate and the ethylene carbonate have the same mass, and the lithium hexafluorophosphate ($LiPF_6$) has a molar amount of 1 mol/L.

The rubber film has a Shore hardness of $H_{a1}$, the second swollen rubber film has a Shore hardness of $H_{a2}$, and the rubber film and the second swollen rubber film satisfy: $0 \leq H_{a2}/H_{a1} \leq 0.5$, and $0 \leq H_{a2} \leq 45$.

The composition of the preset electrolyte is similar to or substantially the same as that of an electrolyte in a battery, and a swelling state of the rubber film is reflected by immersing the rubber film in the preset electrolyte. The dimethyl carbonate (DMC), ethyl methyl carbonate (EMC), and ethylene carbonate (EC) may be considered as solvents of the preset electrolyte, and the lithium hexafluorophosphate ($LiPF_6$) is a lithium salt of the preset electrolyte.

The rubber film is immersed in the preset electrolyte, and may gradually absorb the solvent and lock the solvent molecules in the rubber film. The rubber film swells and may gel, and the mechanical strength of the gelled rubber film may decrease. As the degree of swelling increases, the reduction in mechanical strength will be more significant, so in the embodiment of the present application, the mechanical strength of the rubber film before swelling and the rubber film after swelling may be used to reflect the degree of swelling of the rubber film. The Shore hardness is used to represent the mechanical strength of the rubber film.

In the embodiment of the present application, the Shore hardness of the rubber film has a meaning well-known in the art and may be tested by using equipment and methods well-known in the art. It can be tested in accordance with the standard GB/T531.1-2008/ISO 7619-1:2004 "Test method for an indentation hardness of vulcanized rubber or thermoplastic rubber Part 1: Shore durometer method (Shore hardness)". For example, three rubber films or three second swollen rubber films are stacked in a thickness direction as a sample so that a thickness after stacking is 3 mm, and the stacked sample is placed in a Shore AM hardness tester for testing.

After testing, the rubber film and the second swollen rubber film of the embodiment of the present application satisfy: $0 \leq H_{a2}/H_{a1} \leq 0.5$, and $0 \leq H_{a2} < 40$.

The swelling polymer may be arranged in at least one of the first electrode plate and the second electrode plate. A film layer of the first electrode plate is of a porous structure. For example, there are pores between the active substance particles to form the porous structure. The swelling polymer may be dispersed in the porous structure of the first electrode plate. On the one hand, the swelling polymer may rely on the porous structure as a support to form a liquid-retaining network, thereby achieving a liquid-locking effect while improving interface performance of the active substance particles, a transmission rate of lithium ions can be increased, interface side reactions of the active substance layer can be reduced, and the cycle performance of the battery cell can be improved. On the other hand, the swelling polymer swells after contacting the electrolyte, and its mechanical strength is reduced. During the cyclic charge and discharge process of the battery cell, it can effectively adapt to the expansion deformation of the active substance particles during the charge and discharge process, and can more effectively adhere to surfaces of the active substance particles, thereby reducing problems such as solid-liquid interface debonding caused by swelling and forming a gel-like substance.

A film layer of the second electrode plate is also of a porous structure, and its structural form is similar to that of the

first electrode plate. The porous structure may be a porous structure formed between the active substance particles in the second electrode plate. The swelling behavior and mechanical properties of the swelling polymer are as described in the first electrode plate and are not be repeated here.

When the rubber film and the second swollen rubber film of the embodiment of the present application satisfy the above-mentioned relationship, the swelling capability is relatively strong, the electrolyte locking effect is relatively good, and it may more effectively adapt to the expansion deformation of the active substance particles of the charge and discharge process during the cyclic charge and discharge process of the battery cell, and more effectively adhere to the surfaces of the active substance particles, thereby reducing problems such as solid-liquid interface debonding caused by swelling and forming the gel-like substance, and improving the cycle performance of the battery cell.

Exemplarily, the rubber film and the second swollen rubber film may satisfy $0 \le H_{a2}/H_{a1} \le 0.2$.

For example, $H_{a2}/H_{a1}$ may be 0, 0.05, 0.1, 0.15, 0.2, 0.25, 0.3, 0.35, 0.4, 0.45, 0.5, or a range composed of any two of the above numerical values.

Further optionally, $20 \le H_{a1} \le 100$.

For example, the Shore hardness $H_{a1}$ of the rubber film may be 20, 25, 30, 35, 40, 45, 50, 55, 60, 65, 70, 75, 80, 85, 90, 95, 100, or a range composed of any two of the above numerical values.

$0 \le H_{a2} \le 45$. For example, the Shore hardness $H_{a2}$ of the second swollen rubber film may be 0.1, 0.2, 0.3, 0.5, 1, 1.2, 1.5, 1.8, 2, 2.2, 2.5, 2.8, 3, 3.2, 3.5, 3.8, 4, 4.2, 4.5, 4.8, 5, 5.2, 5.5, 5.8, 6, 6.2, 6.5, 6.8, 7, 7.5, 8, 8.5, 9, 9.5, 10, 10.5, 11, 11.5, 12, 12.5, 13, 13.5, 14, 14.5, 15, 15.5, 16, 16.5, 17, 17.5, 18, 18.5, 19, 19.5, 20, 25, 30, 35, 40, 41, 42, 43, 44, 45, or a range composed of any two of the above numerical values.

In the present application, the Shore hardness $H_{a1}$ and the Shore hardness $H_{a2}$ have the same measurement standard.

In order to further improve the liquid absorption and storage capabilities of the swelling polymer, the material of the swelling polymer may be further selected to improve the affinity between the swelling polymer and the electrolyte, thereby improving the liquid absorption and storage capabilities of the swelling polymer.

In some embodiments, the swelling polymer may include at least one of a fluoropolymer, an ether polymer, an ester polymer and an aldehyde ketone polymer.

[Fluoropolymer]

In some embodiments, the swelling polymer includes the fluoropolymer.

In some embodiments, the crystallinity of the fluoropolymer measured through the differential scanning calorimetry is $X_{c1}$, and $0 < X_{c1} \le 30\%$. Exemplarily, the crystallinity $X_{c1}\%$ of the fluoropolymer measured through the differential scanning calorimetry may be 1%, 5%, 10%, 15%, 20%, 25%, 30%, or a range composed of any two of the above numerical values.

In some embodiments, the melting temperature of the fluoropolymer is $T_{m1}$°C, and $0 < T_{m1} \le 140$°C. Exemplarily, the melting temperature of the polymer may be 10°C, 20°C, 50°C, 70°C, 90°C, 100°C, 120°C, 140°C, or a range composed of any two of the above numerical values.

In some embodiments, the glass-transition temperature of the fluoropolymer is $T_{g1}$°C, and $-60°C \le T_{g1} \le 25°C$. Exemplarily, the glass-transition temperature of the fluoropolymer may be -60°C, -30°C, 0°C, 10°C, 25°C, or a range composed of any two of the above numerical values.

Therefore, the fluoropolymer has the relatively low crystallinity, melting temperature or glass-transition temperature. The better the flexibility of a molecular chain of the fluoropolymer is, the better the flexibility of molecular chain segments is, and the easier to open adjacent molecular chains are. Solvent molecules in the electrolyte enter between the molecular chains of the fluoropolymer to form a gel-like substance, which effectively stores the electrolyte on the surface of the active substance and improves the infiltration performance for the active substance.

In some embodiments, the fluoropolymer includes at least one of a compound represented by Formula (AI) to a compound represented by Formula (AIII).

The compound represented by Formula (AI) is shown as follows:

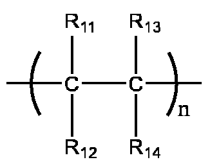

Formula (AI).

In Formula (AI), $R_{11}$, $R_{12}$, $R_{13}$ and $R_{14}$ each independently include a hydrogen atom, a fluorine atom, a chlorine atom, a substituted or unsubstituted alkyl group or a substituted or unsubstituted alkoxy group, and at least one of $R_{11}$, $R_{12}$,

$R_{13}$ and $R_{14}$ includes the fluorine atom. When substituted, a substituent group includes one or more of a nitrile group (-CN), a nitro group, a sulfonic acid group, a sulfonyl group, amide, a carboxyl group, an ester group, and a halogen atom. The halogen atom may include a fluorine atom, a bromine atom, etc., optionally, the fluorine atom.

Optionally, $R_{11}$, $R_{12}$, $R_{13}$ and $R_{14}$ each independently include a hydrogen atom, a fluorine atom, a chlorine atom, a substituted or unsubstituted C1-C10 alkyl group or a substituted or unsubstituted C1-C10 alkoxy group.

Optionally, $R_{11}$, $R_{12}$, $R_{13}$ and $R_{14}$ each independently include a hydrogen atom, a fluorine atom, a chlorine atom, a substituted or unsubstituted C1-C3 alkyl group or a substituted or unsubstituted C1-C3 alkoxy group, and at least one of $R_{11}$, $R_{12}$, $R_{13}$ and $R_{14}$ includes the fluorine atom.

In some embodiments, $R_{11}$, $R_{12}$, $R_{13}$ and $R_{14}$ each independently include a hydrogen atom, a fluorine atom, a chlorine atom, a substituted or unsubstituted C1-C2 alkyl group or a substituted or unsubstituted C1-C2 alkoxy group. Further optionally, $R_{11}$, $R_{12}$, $R_{13}$ and $R_{14}$ each independently include the hydrogen atom, the fluorine atom, the chlorine atom, methyl, fluoromethyl, a methoxy group or a perfluoro methoxy group.

In some embodiments, a polymerization degree n of the fluoropolymer is any positive integer selected from 1000 to 30000, for example, 1000, 2000, 3000, 4000, 5000, 6000, 7000, 8000, 9000, 10000, 11000, 12000, 13000, 14000, 15000, 16000, 17000, 18000, 19000, 20000, 21000, 22000, 23000, 24000, 25000, 26000, 27000, 28000, 29000, or a range composed of any two of the above numerical values.

In some embodiments, the fluoropolymer includes at least one of a compound represented by Formula (AI-1) to a compound represented by Formula (AI-11),

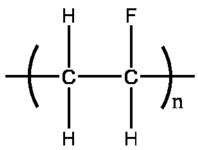 Formula (AI-1), 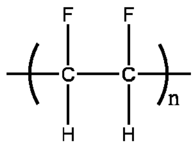 Formula (AI-2), 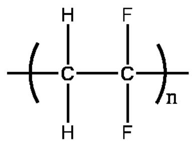 Formula (AI-3),

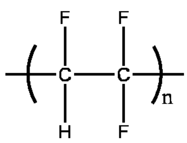 Formula (AI-4), 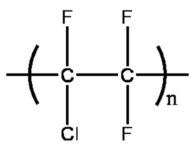 Formula (AI-5), 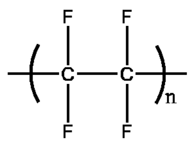 Formula (AI-6),

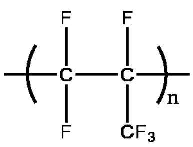 Formula (AI-7), 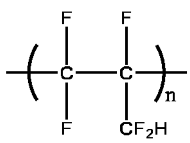 Formula (AI-8), 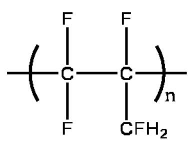 Formula (AI-9),

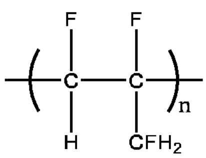 Formula (AI-10), and 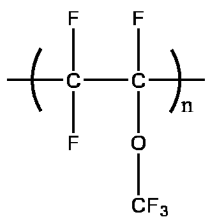 Formula (AI-11).

The compound represented by Formula (AII) is shown as follows:

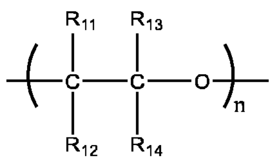 Formula (AII).

In Formula (AII), $R_{11}$, $R_{12}$, $R_{13}$ and $R_{14}$ each independently includes a hydrogen atom, a fluorine atom, a chlorine atom, a substituted or unsubstituted alkyl group or a substituted or unsubstituted alkoxy group, and at least one of $R_{11}$, $R_{12}$, $R_{13}$ and $R_{14}$ includes the fluorine atom. When substituted, a substituent group includes one or more of an nitrile group

(-CN), a nitro group, a sulfonic acid group, a sulfonyl group, amide, a carboxyl group, an ester group, and a halogen atom. The halogen atom may include a fluorine atom, a bromine atom, etc., optionally, the fluorine atom.

Optionally, $R_{11}$, $R_{12}$, $R_{13}$ and $R_{14}$ each independently include a hydrogen atom, a fluorine atom, a chlorine atom, a substituted or unsubstituted C1-C10 alkyl group or a substituted or unsubstituted C1-C10 alkoxy group.

Optionally, $R_{11}$, $R_{12}$, $R_{13}$ and $R_{14}$ each independently include a hydrogen atom, a fluorine atom, a chlorine atom, a substituted or unsubstituted C1-C3 alkyl group or a substituted or unsubstituted C1-C3 alkoxy group, and at least one of $R_{11}$, $R_{12}$, $R_{13}$ and $R_{14}$ includes the fluorine atom.

In some embodiments, $R_{11}$, $R_{12}$, $R_{13}$ and $R_{14}$ each independently include a hydrogen atom, a fluorine atom, a chlorine atom, a substituted or unsubstituted C1-C2 alkyl group or a substituted or unsubstituted C1-C2 alkoxy group. Further optionally, $R_{11}$, $R_{12}$, $R_{13}$ and $R_{14}$ each independently include the hydrogen atom, the fluorine atom, the chlorine atom, methyl, fluoromethyl, a methoxy group or a perfluoro methoxy group.

In some embodiments, a polymerization degree n of the fluoropolymer is any positive integer selected from 1000 to 30000, for example, 1000, 2000, 3000, 4000, 5000, 6000, 7000, 8000, 9000, 10000, 11000, 12000, 13000, 14000, 15000, 16000, 17000, 18000, 19000, 20000, 21000, 22000, 23000, 24000, 25000, 26000, 27000, 28000, 29000, or a range composed of any two of the above numerical values.

In some embodiments, the fluoropolymer includes at least one of a compound represented by Formula (AII-1) to a compound represented by Formula (AII-5),

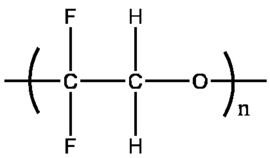
Formula (AII-1),

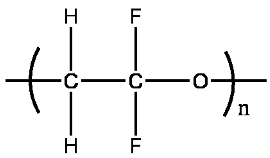
Formula (AII-2),

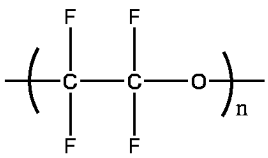
Formula (AII-3),

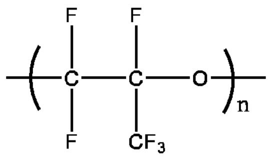
Formula (AII-4),

and

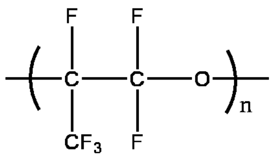
Formula (AII-5).

A compound represented by Formula (AIII) is shown as follows,

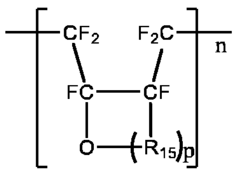
Formula (AIII),

In Formula (AIII), $R_{15}$ includes a single bond, a substituted or unsubstituted alkyl group; and when substituted, a substituent group includes a fluorine atom.

In some embodiments, when substituted, a substituent group may include one or more of a nitrile group (-CN), a nitro group, a sulfonic acid group, a sulfonyl group, amide, a carboxyl group, an ester group, and a halogen atom.

Optionally, $R_{15}$ includes a single bond, and a substituted or unsubstituted C1-C10 alkyl group.

Optionally, $R_{15}$ includes a single bond, and a substituted or unsubstituted C1-C3 alkyl group.

In some embodiments, p is any positive integer selected from 1 to 3, for example, 1, 2 or 3.

In some embodiments, a polymerization degree n of the fluoropolymer is any positive integer selected from 1000 to 30000, for example, 1000, 2000, 3000, 4000, 5000, 6000, 7000, 8000, 9000, 10000, 11000, 12000, 13000, 14000,

15000, 16000, 17000, 18000, 19000, 20000, 21000, 22000, 23000, 24000, 25000, 26000, 27000, 28000, 29000, or a range composed of any two of the above numerical values.

In some embodiments, the fluoropolymer includes at least one of a compound represented by Formula (AIII-1) to a compound represented by Formula (AIII-3),

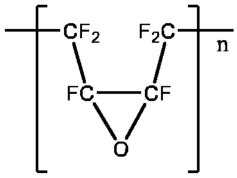
Formula (AIII-1),
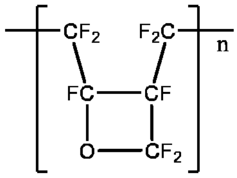
Formula (AIII-2),

and

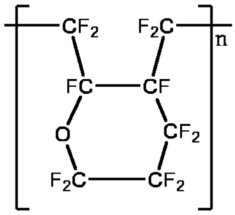
Formula (AIII-3).

Exemplarily, the fluoropolymer includes one or more of polytetrafluoroethylene (PTFE), polyvinylidene fluoride (PVDF), fluorinated ethylene propylene (FEP) copolymer, perfluoroalkoxy (PFA) polymer, perfluoropolyethers (PFPE), polyvinylidene fluoride-hexafluoropropylene (PVDF-HFP) copolymer, polyvinylidene fluoride-trifluoroethylene (PVDF-TrFE) copolymer and perfluoro(1-butenyl vinyl ether) polymer (CYTOP for short).

Optionally, the fluoropolymer includes one or more of polytetrafluoroethylene (PTFE), polyvinylidene fluoride (PVDF), fluorinated ethylene propylene (FEP) copolymer, polyvinylidene fluoride-hexafluoropropylene (PVDF-HFP) copolymer, and polyvinylidene fluoride-trifluoroethylene (PVDF-TrFE) copolymer.

The above fluoropolymer may be derived from one or more of the following monomers: fluorocyclohexane, vinyl fluoride, 1,2-difluoroethylene, vinylidene fluoride, trifluoroethylene, chlorotrifluoroethylene, tetrafluoroethylene, hexafluoropropylene,3,3,3-trifluoropropylene, trifluoropropylene, tetrafluoropropylene, pentafluoropropylene, and the like. Optionally, the above fluoropolymer may be derived from at least two of the following monomers: fluorocyclohexane, vinyl fluoride, 1,2-difluoroethylene, vinylidene fluoride, trifluoroethylene, chlorotrifluoroethylene, tetrafluoroethylene, hexafluoropropylene, 3,3,3-trifluoropropylene, trifluoropropylene, tetrafluoropropylene, and pentafluoropropylene.

The monomers used in the above-mentioned fluoropolymer are all short-chain monomers, which are conducive to polymerization to form a straight-chain linear structure or a short-chain branch structure. This type of structure has a low degree of entanglement, which is conducive to improving the flexibility of the molecular chain. The molecular chain can fully stretch in the electrolyte, thereby further improving the interface performance of the active substance.

In some embodiments, the swelling polymer has a molecular weight ranging from $2\times10^5$ g/mol to $1.5\times10^6$ g/mol.

When the molecular weight of the swelling polymer is within the above range, the interaction force between the molecular chains is relatively weak, which is beneficial for the solvent molecules in the electrolyte to opening the molecular chains and entering between the molecular chains, thereby facilitating the active ions to enter the active substance through the solvent and achieving smooth and rapid migration of the active ions. Exemplarily, a molecular weight of the polymer may be $2\times10^5$ g/mol, $5\times10^5$ g/mol, $8\times10^5$ g/mol, $1\times10^6$ g/mol, $1.5\times10^6$ g/mol, or a range composed of any two of the above numerical values.

The above-mentioned polymers are only examples of structural groups of the main molecular chain. In the embodiment of the present application, the polymer may also be obtained by copolymerizing the above-mentioned structural groups with a small amount of other types of structural groups (such as olefin compounds, ester monomers, nitrile monomers, amide monomers and other compounds).

[Ether polymer]

In some embodiments, the swelling polymer includes the ethers polymer.

In some embodiments, the ether polymer is made into a sheet structure, the sheet structure is subjected to the dynamic frequency scanning test at ($T_{m2}$+20)°C to obtain the elastic modulus G'-loss modulus G" curve, the slope of the elastic modulus G'-loss modulus G" curve is $K_1$, $1<K_1<5$, and $T_{m2}$°C represents the melting temperature of the ether

polymer. Exemplarily, $K_1$ may be 1.01, 1.1, 2, 3, 4, 4.5, 4.8, 4.9, or a range composed of any two of the above numerical values.

In some embodiments, the glass-transition temperature of the ether polymer is $T_{g2}$°C, and -20°C≤$T_{g2}$≤25°C. Exemplarily, the glass-transition temperature of the ether polymer may be -20°C, -15°C, -10°C, -5°C, -0°C, 5°C, 10°C, 15°C, 20°C, 25°C, or a range composed of any two of the above numerical values. The ether polymer has a certain flexibility above the glass-transition temperature, which can help to form a gel-like substance, improve an infiltration effect on the electrode plate, and improve battery cycle performance.

In some embodiments, the ether polymer includes a compound represented by Formula (BI),

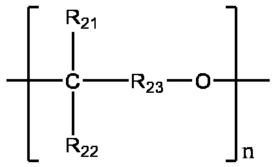
Formula (BI).

In Formula (BI), $R_{21}$ and $R_{22}$ each independently include a hydrogen atom, a substituted or unsubstituted alkyl group or a substituted or unsubstituted alkoxy group; and $R_{23}$ includes a single bond, and substituted or unsubstituted methylene.

Optionally, $R_{21}$ and $R_{22}$ each independently include a hydrogen atom, a substituted or unsubstituted C1-C10 alkyl group or a substituted or unsubstituted C1-C10 alkoxy group.

Optionally, $R_{21}$ and $R_{22}$ each independently include a hydrogen atom, a substituted or unsubstituted C1-C3 alkyl group or a substituted or unsubstituted C1-C3 alkoxy group.

Optionally, $R_{23}$ includes a single bond, and substituted or unsubstituted C1-C10 methylene.

Optionally, $R_{23}$ includes a single bond, and substituted or unsubstituted C1-C5 methylene.

Exemplarily, the ether polymer includes at least one of a compound represented by Formula (BI-1 ) to a compound represented by Formula (BI-8),

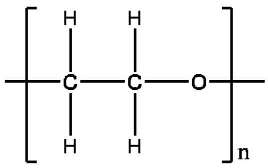
Formula (BI-1),

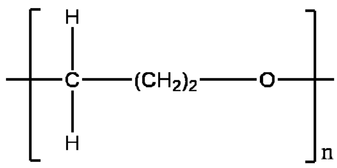
Formula (BI-2),

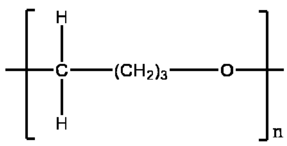
Formula (BI-3),

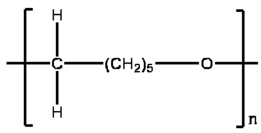
Formula (BI-4),

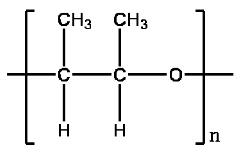
Formula (BI-5),

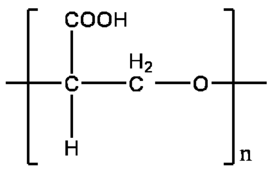
Formula (BI-6),

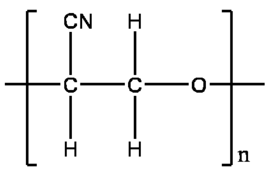
Formula (BI-7), and

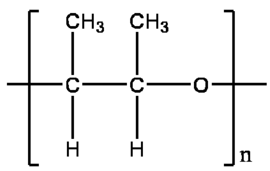
Formula (BI-8).

In some embodiments, the ether polymer includes a compound represented by Formula (BII),

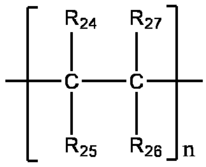

Formula (BII).

In Formula (BII), $R_{24}$ to $R_{27}$ each independently include a hydrogen atom, a substituted or unsubstituted alkyl group, a substituted or unsubstituted alkoxy group or an ether group, and at least one of $R_{24}$ to $R_{27}$ includes a substituted or unsubstituted alkoxy group or ether group.

Optionally, $R_{24}$ to $R_{27}$ each independently include a hydrogen atom, a substituted or unsubstituted C1-C10 alkyl group, and a substituted or unsubstituted C1-C10 alkoxy group or ether group.

Optionally, $R_{24}$ to $R_{27}$ each independently include a hydrogen atom, a substituted or unsubstituted C1-C3 alkyl group, a substituted or unsubstituted C1-C3 alkoxy group or ether group, and at least one of $R_{24}$ to $R_{27}$ includes a substituted or unsubstituted C1-C3 alkoxy group or ether group.

Optionally, $R_{24}$ to $R_{27}$ each independently include a hydrogen atom, a substituted or unsubstituted C1-C2 alkyl group, a substituted or unsubstituted C1-C2 alkoxy group or ether group, and at least one of $R_{24}$ to $R_{27}$ includes a substituted or unsubstituted C1-C2 alkoxy group or ether group.

In some embodiments, the ether polymer includes at least one of a compound represented by Formula (BII-1) to a compound represented by Formula (BII-7),

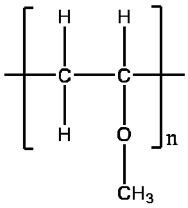

Formula (BII-1),

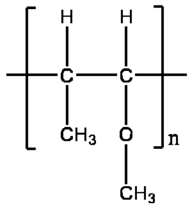

Formula (BII-2),

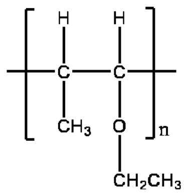

Formula (BII-3),

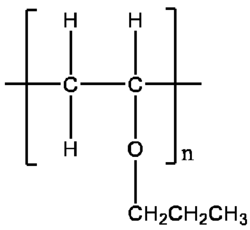

Formula (BII-4),

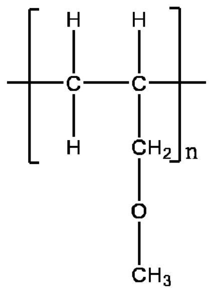

Formula (BII-5),

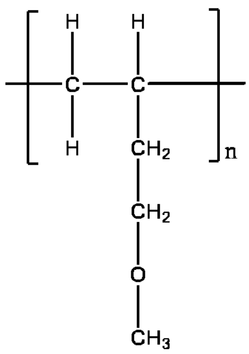

Formula (BII-6), and

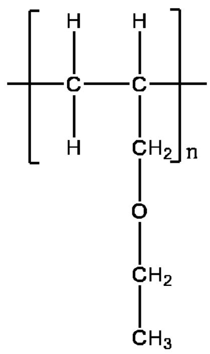

(BII-7).

When substituted, a substituent group may include one or more of an nitrile group (-CN), an nitro group, a sulfonic acid group, a sulfonyl group, amide, a carboxyl group, an ester group, and a halogen atom. The halogen atom may include at least one of a fluorine atom, a bromine atom, and a chlorine atom.

The above-mentioned polymers are only examples of structural groups of the main molecular chain. In the

embodiment of the present application, the polymer may also be obtained by copolymerizing the above-mentioned structural groups with a small amount of other types of structural groups (such as olefin compounds, ester monomers, nitrile monomers, amide monomers and other compounds).

In some embodiments, a polymerization degree n of the ether polymer is any positive integer selected from 1500 to 25000, for example, 1500, 2000, 3000, 4000, 5000, 6000, 7000, 8000, 9000, 10000, 11000, 12000, 13000, 14000, 15000, 16000, 17000, 18000, 19000, 20000, 21000, 22000, 23000, 24000, 25000, or a range composed of any two of the above numerical values.

Optionally, the polymerization degree n of the ether polymer is any positive integer selected from 3000 to 18000.

In some embodiments, the ether polymer has a molecular weight ranging from $1.2\times10^5$ g/mol to $1.0\times10^6$ g/mol.

Exemplarily, the molecular weight of the polymer may be $1.2\times10^5$ g/mol, $2\times10^5$ g/mol, $5\times10^5$ g/mol, $8\times10^5$ g/mol, $1\times10^6$ g/mol, or a range composed of any two of the above numerical values.

[Ester polymer]

In some embodiments, the swelling polymer includes the ester polymer.

In some embodiments, the ester polymer is made into a sheet structure. The sheet structure is subjected to the dynamic frequency scanning test at $(T_{m3}+20)$°C to obtain the elastic modulus G'-loss modulus G" curve, the slope of the elastic modulus G'-loss modulus G" curve is $K_2$, $1<K_2<5$, and $T_{m3}$°C represents the melting temperature of the ester polymer. Exemplarily, $K_2$ may be 1.01, 1.1, 2, 3, 4, 4.5, or a range composed of any two of the above numerical values.

In some embodiments, the glass-transition temperature of the ester polymer is $T_{g3}$°C, -20°C≤$T_{g3}$≤25°C. Exemplarily, the glass-transition temperature of the ester polymer may be -20°C, -15°C, -10°C, -5°C, -0°C, 5°C, 10°C, 15°C, 20°C, 25°C, or a range composed of any two of the above numerical values. The ester polymer has a certain flexibility above the glass-transition temperature, which can help to form a gel-like substance, improve an infiltration effect on the electrode plate, and improve battery cycle performance.

In some embodiments, the ester polymer includes a compound represented by Formula (CI),

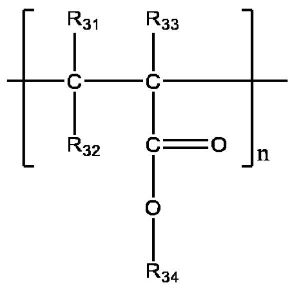

Formula (CI).

In Formula (CI), $R_{31}$, $R_{32}$ and $R_{33}$ each independently include a hydrogen atom, or a substituted or unsubstituted alkyl group. $R_{34}$ includes a substituted or unsubstituted alkyl group, or a substituted or unsubstituted hydroxyalkyl group.

Optionally, $R_{31}$, $R_{32}$ and $R_{33}$ each independently include a hydrogen atom, or a substituted or unsubstituted C1-C10 alkyl group.

Optionally, $R_{31}$, $R_{32}$ and $R_{33}$ each independently include a hydrogen atom, or a substituted or unsubstituted C1-C8 alkyl group. $R_{34}$ includes a substituted or unsubstituted C1-C8 alkyl group, or a substituted or unsubstituted C1-C8 hydroxyalkyl group.

In some embodiments, $R_{34}$ includes a substituted or unsubstituted C1-C6 alkyl group, or a substituted or unsubstituted C1-C6 hydroxyalkyl group.

In some embodiments, $R_{31}$ includes a hydrogen atom, or substituted or unsubstituted methyl.

In some embodiments, $R_{32}$ and $R_{33}$ each independently include a hydrogen atom.

In some embodiments, $R_{34}$ includes a substituted or unsubstituted C1-C4 alkyl group, or a substituted or unsubstituted C1-C4 hydroxyalkyl group.

Exemplarily, the ester polymer includes at least one of a compound represented by Formula (CI-1 ) to a compound represented by Formula (CI-15),

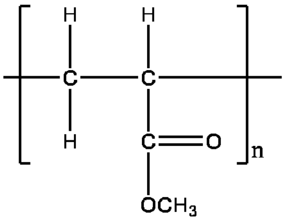 Formula (CI-1), 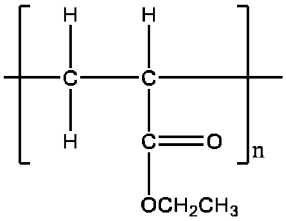 Formula (CI-2),

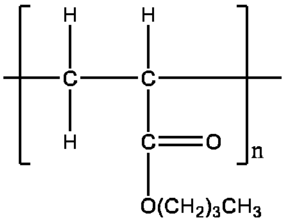 Formula (CI-3), 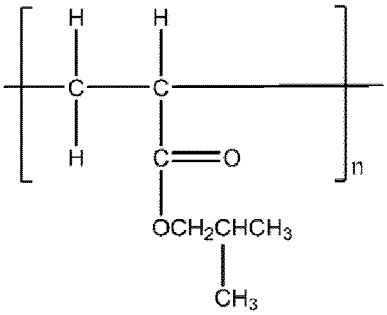 Formula (CI-4),

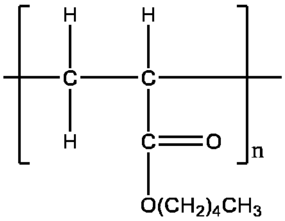 Formula (CI-5), 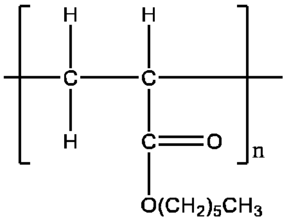 Formula (CI-6),

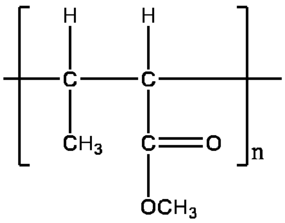 Formula (CI-7), 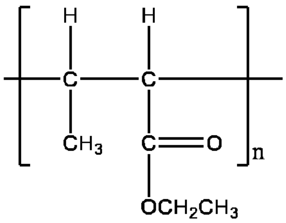 Formula (CI-8),

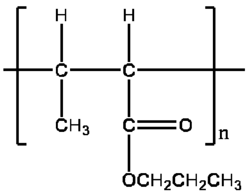 Formula (CI-9), 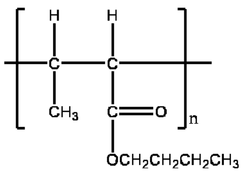 Formula (CI-10), 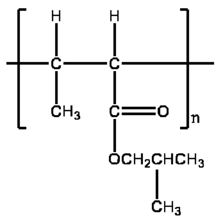 Formula (CI-11),

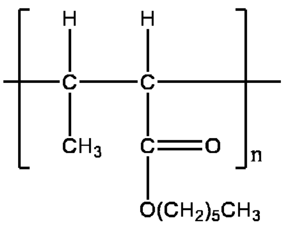 Formula (CI-12),

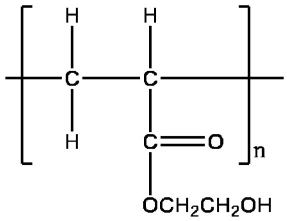 Formula (CI-13), 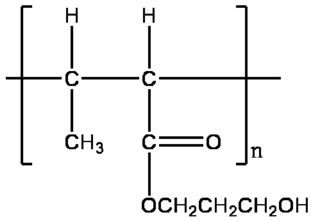 Formula (CI-14),

and

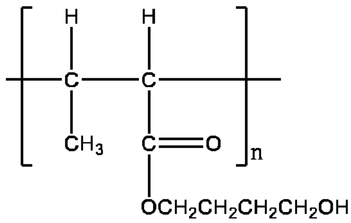 Formula (CI-15).

In some embodiments, the ester polymer includes a compound represented by Formula (CII),

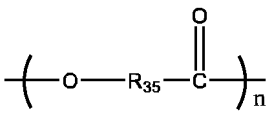 Formula (CII).

In Formula (CII), $R_{35}$ includes substituted or unsubstituted methylene.

Optionally $R_{35}$ includes substituted or unsubstituted C1-C10 methylene.

Optionally, $R_{35}$ includes substituted or unsubstituted C2-C6 methylene.

Optionally, $R_{35}$ includes substituted or unsubstituted C2-C4 methylene.

Exemplarily, the ester polymer includes at least one of a compound represented by Formula (CII-1 ) to a compound represented by Formula (CII-5),

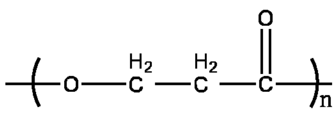 Formula (CII-1), 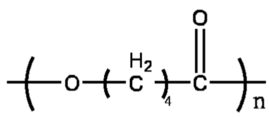 Formula (CII-2),

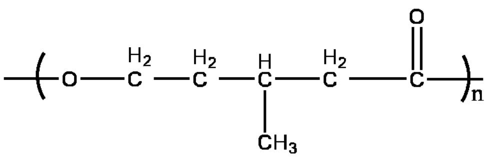 Formula (CII-3), 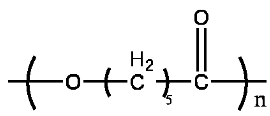 Formula (CII-4),

and

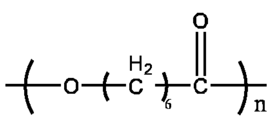 (CII-5).

In some embodiments, the ester polymer includes a compound represented by Formula (CIII),

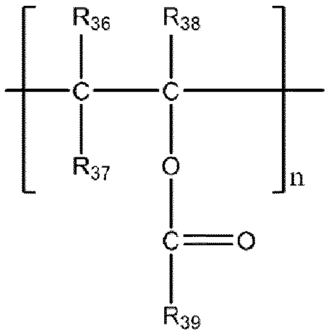
Formula (CIII).

In Formula (CIII), $R_{36}$, $R_{37}$ and $R_{38}$ each independently include a hydrogen atom, or a substituted or unsubstituted C1-C8 alkyl group; $R_{39}$ includes a substituted or unsubstituted C1-C8 alkyl group; and

Optionally, $R_{36}$, $R_{37}$ and $R_{38}$ each independently include a hydrogen atom, and a substituted or unsubstituted C1-C4 alkyl group.

Exemplarily, the ester polymer includes at least one of a compound represented by Formula (CIII-1) to a compound represented by Formula (CIII-5),

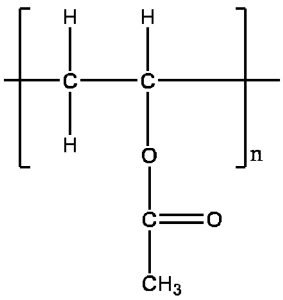
Formula (CIII-1),

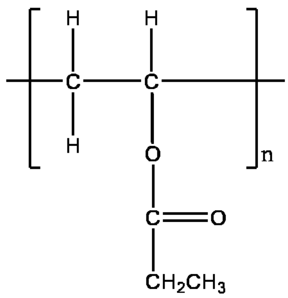
Formula (CIII-2),

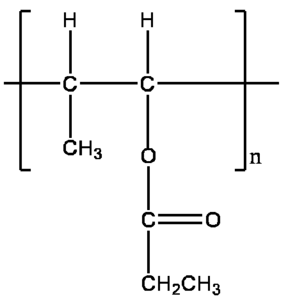
Formula (CIII-3),

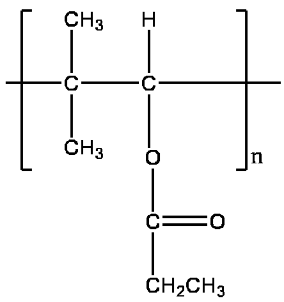
Formula (CIII-4),

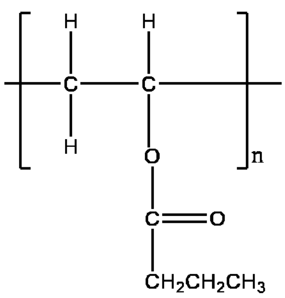
Formula (CIII-5), and

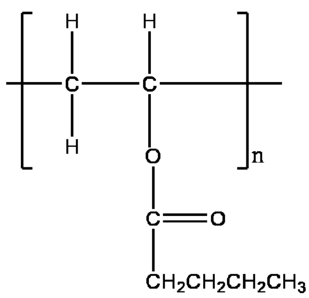
Formula (CIII-6).

When substituted, a substituent group may include one or more of an nitrile group (-CN), an nitro group, a sulfonic acid group, a sulfonyl group, amide, a carboxyl group, an ester group, and a halogen atom. The halogen atom may include at least one of a fluorine atom, a bromine atom, or a chlorine atom.

The above-mentioned polymers are only examples of structural groups of the main molecular chain. In the embodiment of the present application, the polymer may also be obtained by copolymerizing the above-mentioned

structural groups with other types of structural groups (such as monomers with a functional group like olefin compounds, acrylonitrile compounds, and maleic anhydride).

In some embodiments, a polymerization degree n of the ester polymer is any positive integer selected from 800 to 20000, for example, 800, 1000, 1500, 2000, 3000, 4000, 5000, 6000, 7000, 8000, 9000, 10000, 11000, 12000, 13000, 14000, 15000, 16000, 17000, 18000, 19000, 20000, or a range composed of any two of the above numerical values.

In some embodiments, the polymerization degree n of the ester polymer is any positive integer selected from 1000 to 15000.

In some embodiments, the ester polymer has a molecular weight ranging from $1.2\times10^5$ g/mol to $1.0\times10^6$ g/mol.

Exemplarily, the molecular weight of the ester polymer may be $1.2\times10^5$ g/mol, $2\times10^5$ g/mol, $5\times10^5$ g/mol, $8\times10^5$ g/mol, $1\times10^6$ g/mol, $1.5\times10^6$ g/mol, or a range composed of any two of the above numerical values.

[Aldehyde ketone polymer]

In some embodiments, the swelling polymer includes the aldehyde ketone polymer.

In some embodiments, the aldehyde ketone polymer is maded into a sheet structure. The sheet structure is subjected to the dynamic frequency scanning test at $(T_{m4}+20)$°C to obtain the elastic modulus G'-loss modulus G" curve, the slope of the elastic modulus G'-loss modulus G" curve is $K_3$, $0.8\leq K_3<5$, and $T_{m4}$°C represents the melting temperature of the aldehyde ketone polymer. Exemplarily, $K_3$ may be 0.8, 0.85, 0.9, 1, 1.01, 1.1, 2, 3, 4, 4.5, or a range composed of any two of the above numerical values.

In some embodiments, the glass-transition temperature of the aldehyde ketone polymer is $T_{g4}$°C, $-20°C\leq T_{g4}\leq 25°C$. Exemplarily, the glass-transition temperature of the aldehyde ketone polymer may be -20°C, -15°C, -10°C, -5°C, -0°C, 5°C, 10°C, 15°C, 20°C, 25°C, or a range composed of any two of the above numerical values. The aldehyde ketone polymer has a certain flexibility above the glass-transition temperature, which can help to form a gel-like substance, improve an infiltration effect on the electrode plate, and improve battery cycle performance.

In some embodiments, the aldehyde ketone polymer includes a compound represented by Formula (DI),

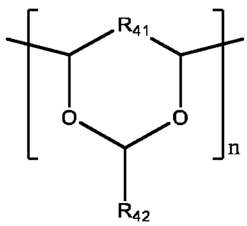

Formula (DI);

In Formula (DI), $R_{41}$ includes a single bond, and a substituted or unsubstituted C1-C6 methylene. $R_{42}$ includes a hydrogen atom, and a substituted or unsubstituted C1-C6 alkyl group.

Optionally, $R_{41}$ includes a single bond, and a substituted or unsubstituted C1-C2 methylene.

Optionally, $R_{42}$ includes a hydrogen atom, and a substituted or unsubstituted C1-C3 alkyl group.

In the embodiment of the present application, the single bond indicates that no group exists and atoms on two sides of the group are connected by the single bond, for example, $R_{41}$ is the single bond, which indicates that carbon atoms on two sides of $R_{41}$ are connected in a form of the single bond.

Exemplarily, the aldehyde ketone polymer includes at least one of a compound represented by Formula (DI-1) to a compound represented by Formula (DI-6),

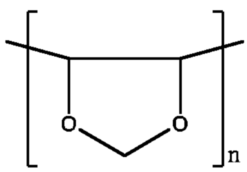 Formula (DI-1), 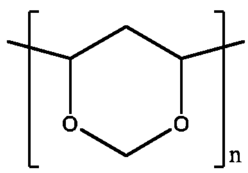 Formula (DI-2),

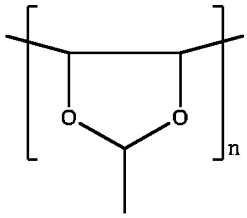 Formula (DI-3), 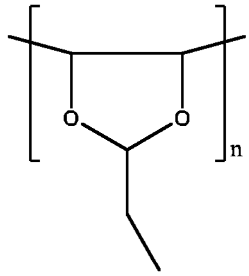 Formula (DI-4),

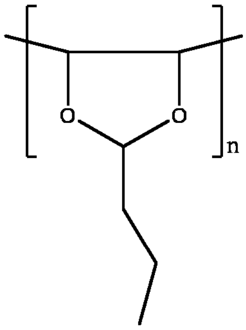 Formula (DI-5), and 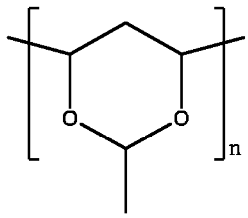 Formula (DI-6).

In some embodiments, the aldehyde ketone polymer includes a compound represented by Formula (DII),

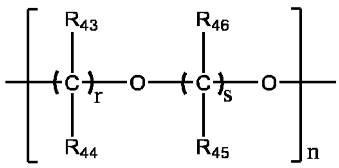 Formula (DII).

In formula (DII), $R_{43}$ to $R_{46}$ each independently include a hydrogen atom, a hydroxyl group, a substituted or unsubstituted C1-C3 alkyl group, a substituted or unsubstituted C1-C3 hydroxyalkyl group, or a substituted or unsubstituted C1-C3 alkoxy group; and r and s each independently are integers selected from 0 to 5, and at least one of r or s is selected from any positive integer.

Optionally, $R_{43}$ to $R_{46}$ each independently include a hydrogen atom, a hydroxyl group, a substituted or unsubstituted C1-C3 alkyl group, a substituted or unsubstituted C1-C2 hydroxyalkyl group, or a substituted or unsubstituted C1-C2 alkoxy group.

In some embodiments, the aldehyde ketone polymer includes at least one of a compound represented by Formula (DII-1) to a compound represented by Formula (DII-4),

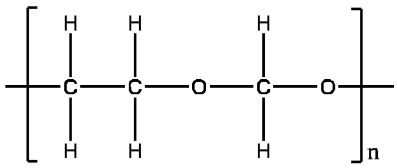 Formula (DII-1), 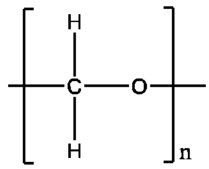 Formula (DII-2),

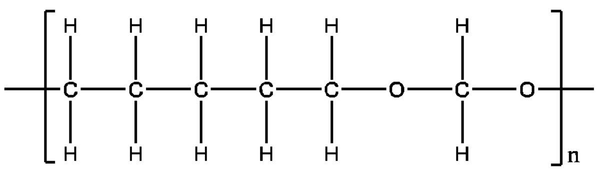 Formula (DII-3),

and

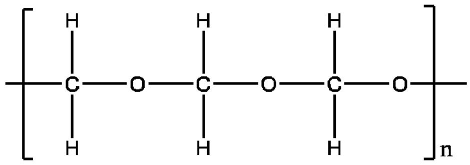
Formula (DII-4).

The above-mentioned polymers are only examples of structural groups of the main molecular chain. In the embodiment of the present application, the polymer may also be obtained by copolymerizing the above-mentioned structural groups with other types of structural groups (such as olefin compounds, enol compounds, and acrylonitrile compounds).

When the above groups are substituted, a substituent group may include one or more of an nitrile group (-CN), an nitro group, a sulfonic acid group, a sulfonyl group, amide, a carboxyl group, an ester group, and a halogen atom. The halogen atom may include at least one of a fluorine atom, a bromine atom, or a chlorine atom.

In some embodiments, a polymerization degree n of the aldehyde ketone polymer is any positive integer selected from 500 to 15000, for example, 500, 800, 1000, 1500, 2000, 3000, 4000, 5000, 6000, 7000, 8000, 9000, 10000, 11000, 12000, 13000, 14000, 15000, or a range composed of any two of the above numerical values.

Optionally, the polymerization degree n of the aldehyde ketone polymer is any positive integer selected from 500 to 10000.

In some embodiments, the aldehyde ketone polymer has a molecular weight ranging from $1.2\times10^5$ g/mol to $1.0\times10^6$ g/mol.

Exemplarily, the molecular weight of the aldehyde ketone polymer may be $1.2\times10^5$ g/mol, $2\times10^5$ g/mol, $5\times10^5$ g/mol, $8\times10^5$ g/mol, $1\times10^6$ g/mol, $1.0\times10^6$ g/mol, or a range composed of any two of the above numerical values.

Related parameters of the swelling polymer in the embodiment of the present application may be detected by using the following method.

The groups of the swelling polymer of the embodiment of the present application may be detected by infrared spectrophotometry IR. Specifically, the swelling polymer is tested by Thermo Nicolet Nexus 670 attenuated total reflection Fourier transform infrared spectrometer (FTIR-ATR), and then tested with reference to standard GB/T6040-2002, where a test range is: ATR method 600~4000 $cm^{-1}$; repeatability: $\pm2$ $cm^{-1}$; resolution: better than 4 $cm^{-1}$; transmission depth 0.2-0.6 $\mu$m.

The structure of the swelling polymer in the embodiment of the present application may be tested by nuclear magnetic resonance (NMR). Specifically, 1H NMR and 13C NMR are performed on a Varian Mercury Plus-400 nuclear magnetic resonance instrument, a test temperature is 20°C, TMS is used as an internal standard, $CDCl_3$ is used as a solvent, and a proton resonance frequency is 400 MHz.

The polymer monomer type of the swelling polymer of the embodiment of the present application (especially suitable for monomers with a small proportion in the polymer) may be tested by pyrolysis-gas chromatography-mass spectrometry. The specific test steps are as follows: 0.5 mg of the sample is accurately weighed and put into a sample cup; after fixed to a sample feeding rod, it is put into a pyrolyzer installed near a gas chromatography (GC) sample feeding port; after a temperature of the pyrolyzer reaches a set temperature, a sample feeding button is pressed, and the sample cup quickly falls into a core of a pyrolysis furnace by free fall; in the inert gas $N_2$ atmosphere, volatile components are instantly vaporized and carried into a gas chromatography column by carrier gas for separation; and finally, it is detected by a flame ionization detector (FID) or a mass spectrometer (MS) to obtain a gas chromatogram or a total ion flow diagram.

The molecular weight of the swelling polymer in the embodiment of the present application has a meaning well known in the art, and may be measured using equipment and methods commonly used in the art. It may be tested by gel permeation chromatography (GPC). The specific testing steps are: an appropriate amount of the sample to be tested (a sample concentration is sufficient to ensure 8%-12% shading) is taken, 20 ml of deionized water is added, and meanwhile, infrared ultrasound is performed for 5 min (53KHz/120W) to ensure that the sample is completely dispersed, and then the sample is measured according to GB/T19077-2016/ISO 13320:2009 standard.

The swelling polymer may be set in various positions, such as in the electrode plate, in a separator, etc. Next, a setting form of the swelling polymer is described.

In some embodiments, the electrode plate includes the swelling polymer. Specifically, the first electrode plate includes a current collector and a film layer arranged on at least one surface of the current collector. The film layer includes the swelling polymer and active substance particles. The swelling polymer may be arranged only in the first electrode plate, or only in the second electrode plate, or the swelling polymer is arranged in both the first electrode plate and the second electrode plate. The first electrode plate may be a positive electrode plate. Correspondingly, the second electrode plate may be a negative electrode plate; or the first electrode plate may be a negative electrode plate, and correspondingly, the second electrode plate may be a positive electrode plate.

As some examples, the film layer includes a polymer layer and an active substance layer, the polymer layer

includes the swelling polymer, and the active substance layer includes active substance particles. The active substance layer is arranged on at least one surface of the current collector, and the polymer layer is arranged on a surface of the active substance layer facing away from the current collector, which may be understood that the active substance particles, an adhesive and the like are dried on a surface of the current collector to form the active substance layer, and the swelling polymer is arranged on the surface of the active substance layer facing away from the current collector. Such a setting helps the swelling polymer to lock the electrolyte on the surfaces of the active substance particles to form a slow-release storage point, thereby improving the transmission rate of the active ions while protecting an interface of the active substance layer, reducing interface side reactions, and improving the high-temperature storage performance and cycle performance of the battery cell.

Specifically, a process for preparing the electrode plate includes:

adding active substance particles into a solvent to prepare an active slurry;
applying the active slurry to the surface of the current collector and drying and solidifying it as an active substance layer; and
arranging the swelling polymer on a surface of the active substance layer to form an electrode plate.

As some other examples, there are a plurality of active substance particles, a pore exists between every two adjacent active substance particles, and the swelling polymer is distributed in the pores. Such a setting form can improve the liquid storage capability of the active substance layer, namely, a capability of locking the electrolyte, thereby improving reliability and the cycle performance of the battery cell.

Specifically, a process for preparing an electrode plate in an embodiment includes:

dispersing the swelling polymer in a solvent to form a mixed system;
adding active substance particles into the mixed system to prepare a slurry; and
applying the slurry to the surface of the current collector and drying and solidifying it as the electrode plate.

Specifically, a process for preparing an electrode plate in another embodiment includes:

dispersing the swelling polymer and the active substance particles in a solvent to prepare a slurry; and
applying the slurry to the surface of the current collector and drying and solidifying it as the electrode plate.

As yet some other examples, the swelling polymer is distributed on the surfaces of the active substance particles and distributed in the pores between the active substance particles.

Specifically, a process for preparing an electrode plate in an embodiment includes:

dispersing the swelling polymer and the active substance particles in a solvent to prepare a slurry;
applying the slurry to the surface of the current collector and drying and solidifying it as a film layer; and
arranging the swelling polymer on a surface of the film layer to form the electrode plate.

In some other embodiments, the separator includes the swelling polymer. Specifically, the separator may include a base material. Optionally, the separator may also include a coating arranged on at least one surface of the base material.

As some examples, the base material is generally of a porous structure having pores, and the swelling polymer may be distributed in the pores of the base material.

As some other examples, the swelling polymer may be distributed in the coating.

As yet some other examples, the swelling polymer may be arranged on a surface of the coating facing away from the base material.

The specific distribution position of the swelling polymer may be any one of the above three forms, any two of them, or a combination of the above three positions.

In some embodiments, the separator includes a base material. The base material includes the swelling polymer, and the swelling polymer may be used as a main material of the base material, or the swelling polymer may be blended with the main material of the base material to prepare the base material.

In yet some other embodiments, the swelling polymer may be arranged in the electrode plate and the separator, and a specific setting position is described as above and is not repeated here.

In some implementations, the battery cell further includes a liquid electrolyte, and the liquid electrolyte is located in the electrode assembly.

The liquid electrolyte has mobility, and thus more conveniently flows to around the active substance particles, and the transmission rate of the active ions is improved. In the related art, the liquid electrolyte usually has the following forms in a battery cell: one is diffused into the pore structure of the electrode assembly, such as located in the pores of the electrode

plate and/or the separator; the other is free in the battery cell. The liquid electrolyte in the embodiments of the present application has the following forms: one is diffused into the pore structure of the electrode assembly, such as located in the pores of the electrode plate and/or the separator; the other is diffused into the swelling polymer, so that the liquid electrolyte in the embodiments of the present application is basically all located inside the electrode assembly, and there is basically no free electrolyte in the battery cell, which can significantly improve the use reliability and cycle performance of the battery cell.

In some embodiments, the battery cell further satisfies $0 \leq y/V_{total\ porosity} \leq 15\%$, where

y represents the numerical value of the volume of the free electrolyte in the battery cell and has a unit of mL; and $V_{total\ porosity}$ represents the numerical value of the pore volume of the electrode assembly and has a unit of mL.

When calculating a formula, only the numerical value is substituted for calculation, without substituting the unit for calculation.

When the battery cell satisfies the above conditions, the content of the free electrolyte in the battery cell is extremely small, or even the free electrolyte is basically not contained in the battery cell, thereby significantly improving the use reliability and cycle performance of the battery cell.

Exemplarily, $y/V_{total\ porosity}$ may be 0%, 1%, 2%, 3%, 4%, 5%, 6%, 7%, 8%, 9%, 10%, 11%, 12%, 13%, 14%, 15%, or a range composed of any two of the above numerical values. $y/V_{total\ porosity}$ is 0, which indicates that a amount of the free electrolyte is 0 mL, namely, basically no free electrolyte is in the battery cell.

The electrode assembly includes the first electrode plate, the second electrode plate and the separator. A pore volume of the electrode assembly includes a sum of a pore volume of the first electrode plate, a pore volume of the second electrode plate and a pore volume of the separator. In the embodiment of the present application, the pore volume has a meaning well known in the art and may be detected by using equipment and methods known in the art. For example, it may be obtained by a gas replacement method. The pore volume is v-m, v represents an apparent volume (namely, a total volume), and m represents a true volume.

In some embodiments, the battery cell satisfies: $(m/\rho)/V_{total\ porosity} \geq 80\%$; where

$V_{total\ porosity}$ represents a pore volume of the electrode assembly 52 and has a unit of mL;
m represents a difference between a mass of the battery cell before drying and a mass of the battery cell after drying and has a unit of g; and
$\rho$ represents a density of the electrolyte and has a unit of g/mL.

In the embodiment of the present application, m may be understood as the total amount of electrolyte in the battery cell. After the electrolyte is injected into the battery cell, the electrolyte mainly exists in the following forms: one is located in the pore structure of the electrode plate and/or the separator, and the other is diffused into the swelling polymer. m may be measured by the following method: take a fresh battery cell and fully discharge it to 0% state of charge (SOC), weigh the battery cell, where a weighed mass is m1; form a hole with a diameter of φ5-8 mm in a local position of the battery cell, and place the battery cell on top of a container with the hole facing downward and directly above the container, so that the free electrolyte inside the battery cell may drip into the container below, and make the battery cell still stand in this way for 3h to 5h so that the free electrolyte inside may all drip into the container. Then, the battery cell is dried at 60°C to 95°C for 24 h to 48 h, the battery cell is fully immersed in a dimethyl carbonate (DMC) solvent for 12 h, the battery cell is dried at 60°C to 95°C for 24 h to 48 h, and the dried battery cell is weighed, where a weighed mass is recorded as m2, where m is m1-m2. For example, the battery cell is dried at 60°C for 5 h, and the dried battery cell is weighed. In the embodiment of the present application, the fresh battery cell may be a battery cell that has just left the factory (not subjected to charge and discharge cycles after formation), or a battery cell that is mounted on an electrical apparatus and has been cycled less than 10 times.

In the embodiment of the present application, when there is free electrolyte in the battery cell, the density $\rho$ of the electrolyte may be measured by the following method: a plurality of battery cells (for example, 10 battery cells) in the battery may be taken, a predetermined mass of electrolyte may be poured out, and a volume of the poured electrolyte may be measured, where a ratio of the predetermined mass to the volume is the density $\rho$ of the electrolyte. In the case where there is no free electrolyte in the battery cell, the density $\rho$ of the electrolyte is the density of the electrolyte injected into the battery cell.

When the battery cell satisfies the above conditions, most of the liquid electrolyte is located in the pore structure of the electrode assembly, namely, the electrode assembly has good liquid absorption and retaining capabilities, which is conducive to the transmission of the active ions and improving the dynamic performance of the battery cell. A small portion of the liquid electrolyte may be diffused into the swelling polymer and is released during the cyclic charge and discharge process of the battery cell, and as an amount of released electrolyte is relatively small, the liquid electrolyte is not prone to flowing to the outside of the electrode assembly, and the electrolyte can infiltrate the electrode assembly more uniformly, thereby improving the cycle performance of the battery cell.

Exemplarily, $(m/\rho)/V_{total\ porosity} \geq 80\%$, $(m/\rho)/V_{total\ porosity} \geq 82\%$, $(m/\rho)/V_{total\ porosity} \geq 85\%$, $(m/\rho)/V_{total\ porosity} \geq 86\%$, $(m/\rho)/V_{total\ porosity} \geq 88\%$, $(m/\rho)/V_{total\ porosity} \geq 90\%$, $(m/\rho)/V_{total\ porosity} \geq 92\%$, or $(m/\rho)/V_{total\ porosity} \geq 95\%$.

In some embodiments, the battery cell further satisfies: $0 \leq y/Ah \leq 15\%$; where
y represents the numerical value of the volume of the free electrolyte in the battery cell and has a unit of mL; and
Ah represents a numerical value of a nominal capacity of the battery cell and has a unit of Ah.

When calculating a formula, only the numerical value is substituted into the formula for calculation without substituting its unit.

The volume y(mL) of the free electrolyte may be measured by the following method: take a fresh battery cell and fully discharge it to 0% state of charge (SOC); form a hole with a diameter of φ5-8 mm in a local position of the battery cell, and place the battery cell on top of a container with the hole facing downward and directly above the container, so that the free electrolyte inside the battery cell may drip into the container below; make the battery cell still stand in this way for 3h to 5h so that the free electrolyte inside may all drip into the container; and then a volume of the electrolyte in the container is weighed to obtain y. In the embodiment of the present application, the fresh battery cell may be a battery cell that has just left the factory (not subjected to charge and discharge cycles after formation), or a battery cell that is mounted on an electrical apparatus and has been cycled less than 10 times.

When the battery cell satisfies the above conditions, the content of the free electrolyte in the battery cell is extremely small, or even the free electrolyte is basically not contained in the battery cell, thereby significantly improving the use reliability and cycle performance of the battery cell.

Exemplarily, y/Ah may be 0%, 1%, 2%, 3%, 4%, 5%, 6%, 7%, 8%, 9%, 10%, 11%, 12%, 13%, 14%, 15%, or a range composed of any two of the above numerical values. y/Ah is 0, which indicates that an amount of the free electrolyte is 0, namely, basically no free electrolyte is in the battery cell.

In some embodiments, the battery cell, after subjected to the linear sweep frequency vibration test, is charged to 100% state-of-charge (SOC), a hole is formed in the battery cell and is arranged at a lowest position in a vertical direction, a volume of the electrolyte flowing out of the battery cell is recorded as M1, 0 mL≤M1≤0.5 mL, and optionally, M1 is 0 mL; where

a vibration direction of the linear sweep frequency vibration test is: single up-and-down vibration;
a vibration frequency of the linear sweep frequency vibration test is: 10 Hz to 55 Hz;
a maximum accelerated velocity of the linear sweep frequency vibration test is: 30 $m/s^2$;
the number of sweep frequency cycles of the linear sweep frequency vibration test is: 10; and
vibration time of the linear sweep frequency vibration test is: 3 h.

In the related art, during the use process of the battery cell, a phenomenon of vibration may occur under the action of an external force, the electrolyte in the electrode assembly may be separated from the electrode assembly under the action of the vibration to form the free electrolyte, and the free electrolyte in the battery cell may leak, which causes corrosion to the battery cell and a risk such as battery cell failure. In the embodiment of the present application, by performing standing and vibration on the battery cell, the liquid electrolyte inside the battery cell may be effectively gathered and thrown out, so as to more accurately judge whether there is flowing liquid electrolyte between the case of the battery cell and the electrode assembly, and determine a content of the free electrolyte. When the battery cell of the embodiment of the present application satisfies the above conditions, the content of the free electrolyte in the battery cell is extremely small, or even basically no free electrolyte is contained in the battery cell, thereby significantly improving the use reliability and cycle performance of the battery cell.

Exemplarily, M1 may be 0 mL, 0.05 mL, 0.1 mL, 0.15 mL, 0.2 mL, 0.25 mL, 0.3 mL, 0.35 mL, 0.4 mL, 0.45 mL, 0.5 mL, or a range composed of any two of the above numerical values. M1 is 0 mL, which indicates that the amount of the free electrolyte is 0, namely, after the battery cell is subjected to the linear sweep frequency vibration test, basically no free electrolyte is in the battery cell.

In some embodiments, after the battery cell undergoes the above vibration test, the case is removed, the electrode assembly is taken out and subjected to an extrusion test, and then a volume of the electrolyte flowing out of the electrode assembly is recorded as M2 (an extrusion device is suspended, and a weighing balance and an electrolyte collection container are set at a bottom), 0 mL≤M2≤0.5 mL, optionally, M2 is 0 mL;
where

an extrusion direction of the extrusion test is: perpendicular to a thickness direction of the electrode assembly 52; and
an extrusion degree of the extrusion test is: an extrusion force being 0.35 MPa.

In the related art, during the use process of the battery cell, the battery cell may bear external extrusion, the

electrolyte in the electrode assembly may be separated from the electrode assembly under the action of the extrusion to form the free electrolyte, and the free electrolyte in the battery cell may leak, which causes corrosion to the battery cell and a risk such as battery cell failure. In the embodiment of the present application, by performing the extrusion test on the battery cell, the liquid electrolyte inside the battery cell may be effectively extruded to flow out, so as to more accurately judge whether there is flowing liquid electrolyte between the case of the battery cell and the electrode assembly, and determine the content of the free electrolyte. When the battery cell of the embodiment of the present application satisfies the above conditions, after extrusion, the content of the free electrolyte in the battery cell is extremely small, or even basically no free electrolyte is contained in the battery cell, thereby significantly improving the use reliability and cycle performance of the battery cell.

Exemplarily, M2 may be 0 mL, 0.05 mL, 0.1 mL, 0.15 mL, 0.2 mL, 0.25 mL, 0.3 mL, 0.35 mL, 0.4 mL, 0.45 mL, 0.5 mL, or a range composed of any two of the above numerical values. M2 is 0 mL, which indicates that the amount of the free electrolyte is 0, namely, after the battery cell is subjected to the extrusion test, basically no free electrolyte is in the battery cell.

In some embodiments, within 4 h when a 200V voltage is provided for the battery cell to form a loop, a temperature change absolute value of the battery cell is ≤4°C.

For example, a negative terminal and the shell of the battery cell are connected to the 200V voltage to form a current loop. A temperature fluctuation range of the battery cell within 4 h is less than or equal to 4°C, and there is no failure behavior such as fire or explosion. Especially when the free electrolyte y=0, the temperature fluctuation range is small, and the use reliability of the battery cell is greatly improved.

[Positive electrode plate]

The battery cell includes the positive electrode plate, the positive electrode plate includes a positive current collector and a positive film layer arranged on the positive current collector, and the positive film layer includes a positive active substance and a swelling polymer.

In some embodiments, the positive film layer includes a polymer layer containing the swelling polymer and a positive active substance layer containing positive active substance particles, the positive active substance layer is arranged on at least one surface of the positive current collector, and the polymer layer is arranged on a surface of the positive active substance layer facing away from the positive current collector.

In some embodiments, there are a plurality of positive active substance particles, there is a pore between every two adjacent positive active substance particles, the swelling polymer is distributed in the pores, and the positive active substance particles and the swelling polymer are located on the same film layer.

As an example, the positive current collector has two surfaces opposite in its own thickness direction, and the positive active substance layer is arranged on either or both of the two opposite surfaces of the positive current collector.

The positive active substance layer includes a positive active substance, and the positive active substance may adopt a positive active substance for the battery cell well known in the art. As an example, the positive active substance includes at least one of a lithium-containing positive active substance and a sodium-containing positive active substance, for example, may include at least one of the following materials: a lithium-containing phosphate compound, a lithium-containing transition metal oxide, a sodium-containing phosphate compound, and a sodium-containing transition metal oxide.

Exemplarily, a general formula of an olivine-type phosphate active substance (lithium-containing phosphate compound) is: $Li_xA_yMe_aM_bP_{1-c}X_cY_z$, where 0≤x≤1.3, 0≤y≤1.3, and 0.9≤x+y≤1.3; 0.9≤a≤1.5, 0≤b≤0.5, and 0.9≤a+b≤1.5; 0≤c≤0.5; 3≤z≤5; A includes one or more of Na, K and Mg; Me includes one or more of Mn, Fe, Co and Ni; M includes one or more of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La and Ce; X includes one or more of S, Si, Cl, B, C and N; and Y includes one or more of O and F. Specifically, the olivine-type phosphate active substance includes one or more of $LiFePO_4$, $LiMnPO_4$, $LiNiPO_4$, and $LiCoPO_4$.

Exemplarily, lithium transition metal oxides (layered materials such as ternary, lithium/sodium nickel oxide, lithium/sodium cobalt oxide, lithium/sodium manganese oxide, lithium-rich layered and rock salt phase layered materials and the like). A general formula of the positive active substance of a layered structure is: $Li_xA_yNi_aCo_bMn_cM_{(1-a-b-c)}Y_z$, where 0≤x≤2.1, 0≤y≤2.1, and 0.9≤x+y≤2.1; 0≤a≤1, 0≤b≤1, 0≤c≤1, and 0.1≤a+b+c≤1; 1.8≤z≤3.5; A includes one or more of Na, K and Mg; M includes one or more of B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La and Ce; and Y includes one or more of O and F. Optionally, y=0. Specifically, the positive active substance of the layered structure may include one or more of lithium cobalt oxide (LCO), lithium nickel oxide (LNO), lithium manganese oxide (LMO), $LiNi_{1/3}Co_{1/3}Mn_{1/3}O_2$ (NML33), $LiNi_{0.5}Co_{0.2}Mn_{0.3}O_2$ (NCM523), $LiNi_{0.6}Co_{0.2}Mn_{0.2}O_2$ (NCM622), $LiNi_{0.8}Co_{0.1}Mn_{0.1}O_2$ (NCM811) and NCA.

During the charge and discharge process of the battery cell, active ions such as Li are deintercalated and consumed, and a molar content of Li in the battery cell differs when the battery cell is discharged to different states. In a list of positive active materials in the embodiments of the present application, the molar content of Li is an initial state of the

material, that is, a state before feeding. The positive active material is used in a battery system, and the molar content of Li may change after charge and discharge cycles.

In a list of positive active materials in the embodiment of the present application, the molar content of oxygen O is only a theoretical state value. The release of oxygen from a lattice will cause the molar content of oxygen O to change. In reality, the molar content of oxygen O may fluctuate.

In the embodiment of the present application, a modified compound may be modified by doping or coating. The doping modification may be the addition of doping elements such as transition metals to the compound, and the coating modification may be the surface coating with materials such as carbon, that is, a carbon coating layer is formed on an outer surface of a particle.

In some embodiments, based on a total mass of the positive film layer, a mass content of the swelling polymer is ≤5%, optionally, 0.05% to 1%. When the mass content of the swelling polymer is within the above range, the swelling polymer can effectively improve the interface performance and structural stability of the positive electrode plate. In this case, the swelling polymer and the positive active substance particles may be located on the same layer or on different layers. The case of being located on different layers means that the swelling polymer is located on the polymer layer and the positive active substance particles are located on the positive active substance layer. Optionally, the swelling polymer and the positive active substance particles may be located on the same layer.

Exemplarily, a mass content of an adsorbed polymer may be 0.05%, 0.08%, 0.10%, 0.11%, 0.12%, 0.15%, 0.16%, 0.18%, 0.20%, 0.22%, 0.25%, 0.28%, 0.30%, 0.32%, 0.35%, 0.38%, 0.40%, 0.42%, 0.45%, 0.48%, 0.50%, 0.55%, 0.58%, 0.60%, 0.70%, 0.80%, 0.90%, 0.95%, 1%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0%, 4.1%, 4.2%, 4.3%, 4.4%, 4.5%, 4.6%, 4.7%, 4.8%, 4.9%, 5.0%, or a range composed of any two of the above numerical values.

In the embodiment of the present application, a mass content of the polymer has a meaning well known in the art and may be detected by using equipment and methods well known in the art. For example, it may be detected by using a thermogravimetric analysis (TGA) test in accordance with JYT014-1996. Specifically, according to a mass loss of the electrode plate during a heating process, amass-temperature curve, i.e., a TG curve, is plotted. A corresponding weight loss mass read according to a decomposition temperature of the polymer is a total mass of the polymer in the electrode plate, thereby calculating the mass content of the polymer. During the test, the following temperature rise program may be used for testing in a nitrogen atmosphere: 5°C/min, RT-500°C, 10°C/min, 500°C-600°C; and a temperature 600°C is kept for 10 min, and it ends.

In some embodiments, the positive current collector may be a metal foil or a composite current collector. As an example of the metal foil, an aluminum foil or an aluminum alloy foil may be used. The composite current collector may include a high molecular material substrate layer and a metal material layer formed on at least one surface of the high molecular material substrate layer. As an example, the metal material may include one of aluminum, an aluminum alloy, nickel, a nickel alloy, titanium, a titanium alloy, silver and a silver alloy, or a combination of some of them. The high molecular material substrate layer may include one of polypropylene (PP), polyethylene terephthalate (PET), polybutylene terephthalate (PBT), polystyrene (PS) and polyethylene (PE), or a combination of some of them.

In some embodiments, the positive active substance layer may further optionally include a positive conductive agent. In the embodiment of the present application, a type of the positive conductive agent is not specifically limited. As an example, the positive conductive agent includes one of superconducting carbon, conductive carbon black, conductive graphite, acetylene black, carbon black, Ketjen black, carbon dots, carbon nanotubes, graphene, and carbon nanofibers, or a combination of some of them. In some embodiments, based on a total mass of the positive active substance layer, a mass percentage content of the positive conductive agent is below 5%.

In some embodiments, the positive active substance layer may further optionally include a positive binder. In the embodiment of the present application, a type of the positive binder is not specifically limited. As an example, the positive binder may include one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorinated acrylate resin, or a combination of some of them. In some embodiments, based on the total mass of the positive active substance layer, a mass percentage content of the positive binder is below 5%. Compared with the crystallinity of the fluoropolymer according to the embodiment of the present application, the crystallinity of the positive binder is higher.

The positive active substance layer is usually formed by applying a positive slurry on the positive current collector, followed by drying and cold pressing. The positive slurry is usually formed by dispersing the positive active substance, the optional swelling polymer, the optional conductive agent, the optional binder and any of other components in a solvent and uniformly stirring a mixture. The solvent may be N-methyl pyrrolidone (NMP), but is not limited thereto. Certainly, the preparation of the positive electrode plate is not limited to the above method, and the preparation method mentioned above may also be used.

[Negative electrode plate]

The battery cell includes a negative electrode plate.

In some embodiments, the negative electrode plate includes a negative current collector and a negative film layer arranged on at least one surface of the negative current collector. For example, the negative current collector has two surfaces opposite in its own thickness direction, and the negative film layer is arranged on either or both of the two opposite surfaces of the negative current collector.

In some embodiments, the negative film layer includes a polymer layer including a swelling polymer and a negative active substance layer including negative active substance particles, the negative active substance layer is arranged on at least one surface of the negative current collector, and the polymer layer is arranged on a surface of the negative active substance layer facing away from the negative current collector.

In some embodiments, there are a plurality of negative active substance particles, there is a pore between every two adjacent negative active substance particles, the swelling polymer is distributed in the pores, and the negative active substance particles and the swelling polymer are located on the same film layer.

The negative active substance may adopt a negative active substance for the battery cell well known in the art. As an example, the negative active substance may include, but not limited to, at least one of natural graphite, artificial graphite, soft carbon, hard carbon, a silicon-based material, a tin-based material, and lithium titanate. The silicon-based material may include at least one of elemental silicon, a silicon oxide, a silicon-carbon composite, a silicon-nitrogen composite, and a silicon alloy material. The tin-based material may include at least one of elemental tin, a tin oxide, and a tin alloy material.

In some embodiments, based on a total mass of the negative film layer, a mass content of the swelling polymer is ≤5%, optionally, 0.5% to 3.5%. When the mass content of the swelling polymer is within the above range, the swelling polymer can effectively improve the interface performance and structural stability of the negative electrode plate. In this case, the swelling polymer and the negative active substance particles may be located on the same layer or on different layers. The case of being located on different layers means that the swelling polymer is located on the polymer layer and the negative active substance particles are located on the negative active substance layer. Optionally, the swelling polymer and the negative active substance particles may be located on the same layer.

Exemplarily, a mass content of an adsorbed polymer may be 0.05%, 0.08%, 0.10%, 0.11%, 0.12%, 0.15%, 0.16%, 0.18%, 0.20%, 0.22%, 0.25%, 0.28%, 0.30%, 0.32%, 0.35%, 0.38%, 0.40%, 0.42%, 0.45%, 0.48%, 0.50%, 0.55%, 0.58%, 0.60%, 0.70%, 0.80%, 0.90%, 0.95%, 1%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0%, 4.1%, 4.2%, 4.3%, 4.4%, 4.5%, 4.6%, 4.7%, 4.8%, 4.9%, 5.0%, or a range composed of any two of the above numerical values.

In some embodiments, the negative active substance layer may further optionally include a negative conductive agent. In the embodiment of the present application, a type of the negative conductive agent is not specifically limited. As an example, the negative conductive agent may include at least one of superconducting carbon, conductive graphite, acetylene black, carbon black, Ketjen black, carbon dots, carbon nanotubes, graphene, and carbon nanofibers. In some embodiments, based on a total mass of the negative active substance layer, a mass percentage content of the negative conductive agent is ≤5%.

In some embodiments, the negative active substance layer may further optionally include a negative binder. In the embodiment of the present application, a type of the negative binder is not specifically limited. As an example, the negative binder may include at least one of styrene butadiene rubber (SBR), water-soluble unsaturated resin SR-1B, water-based acrylic resin (such as polyacrylic acid (PAA), polymethacrylic acid (PMAA), and polyacrylic acid sodium (PAAS)), polyacrylamide (PAM), polyvinyl alcohol (PVA), sodium alginate (SA), and carboxymethyl chitosan (CMCS). In some embodiments, based on a total mass of the negative active substance layer, a mass percentage content of the negative binder is ≤5%.

In some embodiments, the negative active substance layer may further optionally include other additives. As an example, the other additives may include thickeners, such as, carboxymethyl cellulose sodium (CMC), a PTC thermistor material, and the like. In some embodiments, based on a total mass of the negative active substance layer, a mass percentage content of the other additives is ≤2%.

In some embodiments, the negative current collector may be a metal foil or a composite current collector. As an example of the metal foil, a copper foil can be used. The composite current collector may include a high molecular material substrate layer and a metal material layer formed on at least one surface of the high molecular material substrate layer. As an example, the metal material may include at least one of copper, a copper alloy, nickel, a nickel alloy, titanium, a titanium alloy, silver, and a silver alloy. As an example, the high molecular material substrate layer may include at least one of polypropylene (PP), polyethylene terephthalate (PET), polybutylene terephthalate (PBT), polystyrene (PS), and polyethylene (PE).

The negative active substance layer is usually formed by applying a negative slurry on the negative current

collector, followed by drying and cold pressing. The negative slurry is generally formed by dispersing the negative active substance, the optionally swelling polymer, the optional conductive agent, the optional binder, and the other optional additives in a solvent and uniformly stirring a mixture. The solvent may be N-methyl pyrrolidone (NMP) or deionized water, but not limited thereto. Certainly, the preparation of the negative electrode plate is not limited to the above method, and the preparation method mentioned above may also be used.

The negative electrode plate does not exclude other additional functional layers other than the negative active substance layer. For example, in some embodiments, the negative electrode plate in the present application further includes a conductive primer coating (e.g., composed of a conductive agent and a binder) sandwiched between the negative current collector and the negative active substance layer and arranged on a surface of the negative current collector. In some other embodiments, the negative electrode plate of the present application further includes a protective layer covering a surface of the negative active substance layer.

[Separator]

The battery cell includes the separator.

In some embodiments, the separator includes a base material.

In some embodiments, the separator includes the base material and a coating arranged on at least one surface of the base material.

As some examples, the base material is generally of a porous structure having pores, and the swelling polymer may be distributed in the pores of the base material.

As some other examples, the swelling polymer may be distributed in the coating.

As yet some other examples, the swelling polymer may be arranged on a surface of the coating facing away from the base material.

The specific distribution position of the swelling polymer may be any one of the above three forms, any two of them, or a combination of the above three positions.

The embodiment of the present application does not specifically limit a material of the base material, and may adopt any well-known base material with good chemical stability and mechanical stability, for example, at least one of glass fiber, non-woven fabrics, polyethylene, polypropylene and polyvinylidene fluoride. The base material may be a single-layer film or a multi-layer composite film. When the base material is the multi-layer composite film, materials of respective layers may be the same or not. The base material is generally of a porous structure having pores, and the swelling polymer may be distributed in the pores of the base material.

In some embodiments, the coating may further include a filler. Further, the filler may include at least one of inorganic particles, and organic particles. The swelling polymer may be distributed in the coating.

In some embodiments, the swelling polymer may be arranged on a surface of the coating facing away from the base material.

In some embodiments, a decomposition temperature of the filler may be above 200°C, so that the filler may have the characteristics of good thermal stability and being difficult to decompose, thereby further improving the heat resistance of the separator.

The inorganic particles have the characteristics of high thermal stability and are difficult to decompose. Optionally, the inorganic particles include at least one of inorganic particles having a dielectric constant greater than 5, inorganic particles having ion conductivity but not storing ions, and inorganic particles capable of undergoing electrochemical reactions.

Optionally, the inorganic particles having a dielectric constant greater than 5 include at least one of boehmite, aluminum oxide, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, lithium magnesium silicate, sodium magnesium silicate, bentonite, hectorite, zirconium titanate, barium titanate, $Pb(Zr, Ti)O_3$ (abbreviated as PZT), $Pb_{1-m}La_mZr_{1-n}Ti_nO_3$ (abbreviated as PLZT, $0<m<1$, $0<n<1$), $Pb(Mg_3Nb_{2/3})O_3$-$PbTiO_3$ (abbreviated as PMN-PT), and their respective modified inorganic particles. Optionally, the inorganic particles may be modified by chemical modification and/or physical modification. The chemical modification manner include coupling agent modification (e.g., using silane coupling agents, titanate coupling agents, etc.), surfactant modification, polymer grafting modification, etc. The physical modification manner may be mechanical dispersion, ultrasonic dispersion, high energy treatment, or the like. Through modification treatment, the agglomeration of inorganic particles can be reduced, thereby enabling the inorganic particles and nanocellulose to form a more stable and more uniform spatial network structure. Additionally, by selecting coupling agents, surfactants, or polymers with specific functional groups to modify the inorganic particles, an infiltration property of the coating to the electrolyte is better improved, and a bonding strength between the coating and the base material is improved.

Optionally, the inorganic particles having ion conductivity but not storing ions include at least one of $Li_3PO_4$,

lithium titanium phosphate $Li_{x1}Ti_{y1}(PO_4)_3$, lithium aluminum titanium phosphate $Li_{x2}Al_{y2}Ti_{z1}(PO_4)_3$, $(LiAlTiP)_{x3}O_{y3}$ type glass, lithium lanthanum titanate $Li_{x4}La_{y4}TiO_3$, lithium germanium thiophosphate $Li_{x5}Ge_{y5}P_{z2}S_w$, lithium nitride $Li_{x6}N_{y6}$, $SiS_2$ type glass $Li_{x7}Si_{y7}S_{z3}$ and $P_2S_5$ type glass $Li_{x8}P_{y8}S_{z4}$, where 0<x1<2, 0<y1<3, 0<x2<2, 0<y2<1, 0<z1<3, 0<x3<4, 0<y3<13, 0<x4<2, 0<y4<3, 0<x5<4, 0<y5<1, 0<z2<1, 0<w<5, 0<x6<4, 0<y6<2, 0<x7<3, 0<y7<2, 0<z3<4, 0<x8<3, 0<y8<3, 0<z4<7. Accordingly, the ion transmission property of the separator can be further improved.

The organic particles have good thermal stability and are difficult to decompose, which can improve the heat resistance of the separator. At the same time, when an internal temperature of the battery cell reaches a melting point of the organic particles due to overcharge abuse, heat abuse, etc., the organic particles may also melt and be sucked into micropores of the base material due to capillary action to play a role in closing the pores and breaking the circuit, which is beneficial to ensure that the battery cell has high safety performance.

In some embodiments, the organic particles include but not limited to at least one of polyethylene particles, polypropylene particles, polystyrene particles, melamine resin particles, phenolic resin particles, polyester particles (for example, polyethylene terephthalate, polyethylene naphthalate, and polybutylene terephthalate), polyimide particles, polyamide-imide particles, polyaramide particles, polyphenylene sulfide particles, polysulfone particles, polyether sulfone particles, polyether-ether-ketone particles, polyaryletherketone particles, a copolymer of butyl acrylate and ethyl methacrylate (for example, a cross-linked polymer of butyl acrylate and ethyl methacrylate).

In some embodiments, the coating further includes a binder. The type of the binder is not specifically limited by the present application and may adopt any well-known material with good binding property. As an example, the binder includes at least one of aqueous solution type acrylic resin (for example, a homopolymer of acrylic acid, methacrylic acid, sodium acrylate monomer or copolymer with other comonomers), polyvinyl alcohol, isobutylene-maleic anhydride copolymer and polyacrylamide.

Optionally, a content of binder in the coating is <30%, based on a mass of the coating.

[Electrolyte]

In some embodiments, the battery cell includes an electrolyte. The electrolyte may be locked by the swelling polymer and located on the surfaces of the active substance particles, and is a non-free electrolyte.

During the charge and discharge process of the battery cell, the active ions are intercalated and deintercalated back and forth between the positive electrode plate and the negative electrode plate, and the electrolyte serves to conduct the active ions between the positive electrode plate and the negative electrode plate. The present application has no specific limitation on a type of the electrolyte solution, which can be selected according to actual requirements.

The electrolyte solution includes an electrolyte salt and a solvent. Types of the electrolyte salt and the solvent are not specifically limited, and may be selected according to actual demands.

When the battery cell of the present application is a lithium ion battery, as an example, electrolyte salt may include but not limited to at least one of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate ($LiPO_2F_2$), lithium difluoro bis(oxalato)phosphate (LiDFOP), and lithium tetrafluoro(oxalato)phosphate (LiTFOP).

When the battery cell of the present application is a sodium ion battery, as an example, the electrolyte salt may include but not limited to at least one of sodium hexafluorophosphate ($NaPF_6$), sodium tetrafluoroborate ($NaBF_4$), sodium perchlorate ($NaClO_4$), sodium hexafluoroarsenate ($NaAsF_6$), sodium bis(fluorosulfonyl)imide (NaFSI), sodium bis(trifluoromethanesulfonyl)imide (NaTFSI), sodium trifluoromethanesulfonate (NaTFS), sodium difluoro(oxalato)borate (NaDFOB), sodium bis(oxalate)borate (NaBOB), sodium difluorophosphate ($NaPO_2F_2$), sodium difluoro bis(oxalato) phosphate (NaDFOP), and sodium tetrafluoro(oxalato)phosphate (NaTFOP).

As an example, the solvent may include but not limited to at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methylsulfonylmethane (MSM), ethyl methyl sulfone (EMS) and ethylsulfonylethane (ESE).

In some embodiments, an additive may also be optionally included in the electrolyte solution. For example, the additive may include a negative film-forming additive, or may include a positive film-forming additive, and may further include an additive capable of improving certain performances of a battery, such as an additive for improving an overcharging performance of the battery, an additive for improving a high temperature performance of the battery, an additive for improving a low temperature power performance of the battery, etc.

In some embodiments, the positive electrode plate, the separator, and the negative electrode plate may be made into an electrode assembly by a winding process and/or a stacking process.

In some embodiments, the battery cell may include an outer package. The outer package can be used to encapsulate the above-mentioned electrode assembly and electrolyte solution.

In some embodiments, the outer package of the battery cell may be a hard shell, such as a hard plastic shell, an aluminum shell, and a steel shell. The outer package of the battery cell may also be a soft package, such as a bag-type soft package. A material of a soft package may be plastic, such as at least one of polypropylene (PP), polybutylene terephthalate (PBT), and polybutylene succinate (PBS).

In some embodiments, the positive electrode plate, the separator, and the negative electrode plate may be made into an electrode assembly by a winding process and/or a stacking process.

The shape of the battery cell is not specifically limited in the present application, and may be a cylinder shape, a square shape, or any other shape. For example, FIG. 1 shows a battery cell 5 of a square structure as an example.

In some embodiments, as shown in FIG. 1 and FIG. 2, an outer package may include a case 51 and a cover plate 53. The case 51 may include a bottom plate and a side plate connected to the bottom plate, and the bottom plate and the side plate enclose to form an accommodating cavity. The case 51 has an opening communicating with the accommodating cavity, and the cover plate 53 is configured to cover the opening to close the accommodating cavity. The positive electrode plate, the negative electrode plate, and the separator may form an electrode assembly 52 by a winding process or a stacking process. The electrode assembly 52 is encapsulated in the accommodating cavity. The electrode assembly 52 is impregnated with the electrolyte solution. A number of the electrode assembly 52 included in the battery cell 5 can be one or more, and can be adjusted according to requirements.

A preparation method for the battery cell of the present application is well known. In some embodiments, the positive electrode plate, the separator, the negative electrode plate, and the electrolyte may be assembled to form the battery cell. As an example, the positive electrode plate, the separator, and the negative electrode plate may form the electrode assembly by the winding process and/or the stacking process; the electrode assembly is placed in the outer package; the electrolyte is injected after drying; and the battery cell is obtained through processes such as vacuum encapsulation, standing, formation, and shaping.

In some embodiments of the present application, the battery cell according to the present application may be assembled into a battery module, there may be a plurality of battery cells included in the battery module, and the specific number of the battery cells included in the battery module may be adjusted according to the application and capacity of the battery module.

FIG. 3 is a schematic view of a battery module 4 as an example. As shown in FIG. 3, in the battery module 4, a plurality of battery cells 5 can be sequentially arranged in a length direction of the battery module 4. Of course, any other arrangements are also possible. The plurality of battery cells 5 may further be fixed by fasteners.

Optionally, the battery module 4 may further include a shell having an accommodating space, and the plurality of battery cells 5 are accommodated in the accommodating space.

In some embodiments, the aforementioned battery module may further be assembled into a battery pack, and the number of battery modules included in the battery pack may be adjusted according to the application and capacity of the battery pack.

Both the battery module 4 and the battery pack may be used as specific examples of batteries in the embodiments of the present application.

FIG. 4 and FIG. 5 are schematic diagrams of a battery pack 1 as an example. As shown in FIG. 4 and FIG. 5, the battery pack 1 may include a battery box and a plurality of battery modules 4 arranged in the battery box. The battery box includes an upper box body 2 and a lower box body 3, where the upper box body 2 is configured to cover the lower box body 3 to form an enclosed space for accommodating the battery modules 4. The plurality of battery modules 4 may be arranged in the battery box in any manner.

## Electrical apparatus

In a second aspect, the present application provides an electrical apparatus, and the electrical apparatus includes at least one of a battery cell, a battery module, or a battery pack of the present application. The battery cell, the battery module, or the battery pack may be used as a power source of the electrical apparatus, or may be used as an energy storage unit of the electrical apparatus. The electrical apparatus may be but not limited to a mobile device (such as a mobile phone and a laptop), an electric vehicle (such as an all-electric vehicle, a hybrid electric vehicle, a plug-in hybrid electric vehicle, an electric bicycle, an electric scooter, an electric golf cart, and an electric truck), an electric train, a ship, a satellite, an energy storage system, etc. In some embodiments, the battery cell includes a liquid injection hole used to inject an electrolyte; and when the battery cell is applied to the electrical apparatus, the liquid injection hole is located at a bottom of the battery cell in a vertical direction. Since the amount of free electrolyte in the battery cell is very small or even non-existent, when the liquid injection hole is arranged at the bottom of the battery cell in the vertical direction, the use reliability of the battery cell can be improved, thereby improving the use reliability of the electrical apparatus.

For the electrical apparatus, the battery cell, the battery module, or the battery pack may be selected according to

use demands. FIG. 6 is a schematic diagram of an electrical apparatus as an example. The electrical apparatus 6 is an all-electric vehicle, a hybrid electric vehicle, or a plug-in hybrid electric vehicle, etc. In order to meet the demands of the electrical apparatus for high power and high energy density, the battery pack 1 or the battery module may be used. As another example, the electrical apparatus may be a mobile phone, a tablet personal computer, a laptop, etc. The electrical apparatus is generally required to be thin and light, and may use a battery cell as a power source.

**Embodiment**

Examples of the present application will be described below. The examples described below are exemplary and only used to explain the present application, and are not to be construed as limiting the present application. Where specific techniques or conditions are not specified in the examples, the techniques or conditions described in the literature of the art or the product specifications are followed. Where no manufacturers are specified, the employed reagents or instruments are all commercially available conventional products.

**Embodiment 1 Preparation of a lithium ion battery**

(1) Preparation of a positive electrode plate:
A swelling polymer, a positive active substance $LiNi_{0.8}Co_{0.1}Mn_{0.1}O_2$ (NCM811), a conductive agent (carbon black), and a binder (polyvinylidene fluoride (PVDF) are added into N-methyl pyrrolidone (NMP) to be mixed to obtain a positive slurry. A mass ratio of the swelling polymer to $LiNi_{0.8}Co_{0.1}Mn_{0.1}O_2$ (NCM811) to conductive carbon black to the PVDF in the positive slurry is 0.2:97.3:2:0.5. The positive slurry is applied on a current collector aluminum foil, dried at 85°C, then cold pressed, then trimmed, sliced, slit, and then dried at 85°C under vacuum for 4 h, to obtain the positive electrode plate. The binder (polyvinylidene fluoride (PVDF)) has the crystallinity of 48%, the melting temperature of 164°C, and the glass-transition temperature of 39°C.

(2) Preparation of a negative electrode plate:
The swelling polymer, negative active substance artificial graphite, a conductive agent (carbon black), a binder (styrene butadiene rubber (SBR)), and a thickener (sodium carboxymethylcellulose (CMC-Na)) are added into deionized water at a weight ratio of 2.5:94.9:2:0.5:0.1 to be uniformly mixed to prepare a negative slurry. The negative slurry is applied on a current collector copper foil, dried at 85°C, cold-pressed, trimmed, cut, and slit, and then dried at 120°C under vacuum for 12 h, to obtain the negative electrode plate.

(3) Preparation of an electrolyte:
In an environment with a water content of less than 10 ppm, non-aqueous organic solvents (ethylene carbonate (EC) and ethyl methyl carbonate (EMC)) are mixed in a volume ratio of 3:7 to obtain a solvent of electrolyte, and then lithium salt $LiPF_6$ and the mixed solvent are mixed to prepare an electrolyte with a lithium salt concentration of 1 mol/L.

(4) Preparation of a lithium ion battery:
16μm polyethylene (PE) film is used as a separator, the positive electrode plate, the separator and the negative electrode plate are stacked in an order so that the separator is located between the positive electrode plate and the negative electrode plate to play a role in isolation, and then winding is performed to obtain an electrode assembly; and the electrode assembly is put in an outer package shell, the electrolyte is injected after drying, and the lithium ion battery is obtained through processes such as vacuum encapsulation, standing, formation, and shaping.

**Embodiment 2 to Embodiment 4**

A lithium ion battery is prepared by a method similar to that of Embodiment 1. The difference from Embodiment 1 is that the use amount of a swelling polymer is adjusted in Embodiment 2 to Embodiment 4.

**Embodiment 5 to Embodiment 9**

A lithium ion battery is prepared by a method similar to that of Embodiment 1. The difference from Embodiment 1 is that a type of a swelling polymer is adjusted in Embodiment 5 to Embodiment 9.

**Embodiment 10 and Embodiment 11**

A lithium ion battery is prepared by a method similar to that of Embodiment 1. The difference from Embodiment 1 is that a type of a swelling polymer is adjusted in Embodiment 10 to Embodiment 11.

## Comparative example 1

A lithium ion battery is prepared by a method similar to that of Embodiment 1. The difference from Embodiment 1 is that no swelling polymer is used in Comparative example 1.

(1) Preparation of a positive electrode plate:
A positive active substance $LiNi_{0.8}Co_{0.1}Mn_{0.1}O_2$ (NCM811), a conductive agent (carbon black), and a binder (polyvinylidene fluoride (PVDF)) are added into N-methyl pyrrolidone (NMP) to be mixed to obtain a positive slurry. A mass ratio of $LiNi_{0.8}Co_{0.1}Mn_{0.1}O_2$ (NCM811) to the conductive carbon black to the PVDF in the positive slurry is 97.5:2:0.5. The positive slurry is applied on a current collector aluminum foil, dried at 85°C, then cold pressed, then trimmed, sliced, slit, and then dried at 85°C under vacuum for 4 h, to obtain the positive electrode plate.
(2) Preparation of a negative electrode plate:
A negative active substance artificial graphite, a conductive agent (carbon black), a binder styrene butadiene rubber (SBR), and a thickener (sodium carboxymethylcellulose (CMC-Na)) are added into deionized water at a weight ratio of 94.9:2:0.5:2.6 to be uniformly mixed, to obtain a negative slurry. The negative slurry is applied on a current collector copper foil, dried at 85°C, cold-pressed, trimmed, cut, and slit, and then dried at 120°C under vacuum for 12 h, to obtain the negative electrode plate.

## Comparative example 2

A lithium ion battery is prepared by a method similar to that of Embodiment 1. The difference from Embodiment 1 is that a type of a swelling polymer is adjusted in Comparative example 2.

## Test parts

### 1. Test for a capacity retention ratio of a battery cell

Taking Embodiment1 as an example, the prepared lithium ion battery is first fixed in capacity and tested for $C_0$: after discharging to 2.8V at 1C, it is left to still stand for 5 min, then charged to 4.25V at 1/3C constant current, then charged to a current of 0.05C at 4.25V constant voltage, left to still stand for 5 min, and then discharged to 2.8V at 1C, and a capacity released at this time is recorded as $C_0$.
Then, a testing process for the battery capacity retention ratio is as follows: a battery corresponding to Embodiment 1 is charged by step charge to 4.25V (charged for $0.5C_0$Ah at a constant current of 1.2C, then charged for $0.3C_0$ Ah at a constant current of 0.87C, and then charged to V2 at a constant current of 1/3C) at equivalent 1.2C in a room temperature environment, then charged to a current of 0.05C at a constant voltage of 4.25V, laid aside for 5min, and then discharged to 2.8V at 0.33C, an obtained capacity is recorded as an initial capacity C0, and an initial fixture force of a cell is set as 12000N. The above steps are repeated for the same battery above, and a discharge capacity Cn of the battery after the nth cycle is recorded at the same time, then the battery capacity retention ratio after each cycle is Pn=Cn/C0*100%, 250 point values of P1, P2...P250 are used as vertical coordinates, and the corresponding number of cycles is used as the horizontal coordinates, and then a diagram of a curve of battery capacity retention ratio and the number of cycles corresponding to a polymer as shown in FIG. 1 is obtained.
During the test process, the first cycle corresponds to n=1, the second cycle corresponds to n=2, ......, and the 250th cycle corresponds to n=250. Data of the battery capacity retention ratio corresponding to Embodiment 1 in Table 3 is data measured after 250 cycles under the above testing conditions, namely, a value of P250.
The testing processes for Comparative example 1 and other embodiments are the same as above.

### 2. Test for direct current impedance of the battery cell

Taking Embodiment1 as an example, the prepared lithium ion battery is first fixed in capacity and tested for $C_0$: after discharging to 2.8V at 1C, it is left to still stand for 5 min, then charged to 4.25V at 1/3C constant current, then charged to a current of 0.05C at 4.25V constant voltage, left to still stand for 5 min, and then discharged to 2.8V at 1C, and a capacity released at this time is recorded as $C_0$.
Then, a testing process for direct current impedance of a battery is as follows: at 25°C, a battery cell corresponding to Embodiment 1 is charged by step charge to 4.25V (charged for 0.5CoAh at a constant current of 1.2C, then charged for 0.3Co Ah at a constant current of 0.87C, and then charged to V2 at a constant current of 1/3C) at a constant current of equivalent 1.2C, then charged to a current of 0.05C at a constant voltage of 4.25V, and laid aside for 5 min, and then a voltage is recorded as V1. Then, it is discharged for 30s at 1/3C, a voltage is recorded as V2, and (V2-V1)/1/3C, to obtain internal impedance DCR1 of the battery after the first cycle. The initial fixture force of the battery cell is

set as 12000N. The above steps are repeated for the same battery above, and the internal impedance DCRn (n=1, 2, 3......250) of the battery after the nth cycle is recorded at the same time, 250 point values of DCR1, DCR2, DCR3...DCR250 above are used as vertical coordinates, the corresponding number of cycles is used as horizontal coordinates, and then a diagram of a curve of battery discharge DCIR and the number of cycles corresponding to a polymer in Embodiment 1 is obtained. During the test process, the first cycle corresponds to n=1, the second cycle corresponds to n=2, ......, and the 250th cycle corresponds to n=250. In Table 3, an increase ratio of the internal impedance of a battery in Embodiment 1 is = (DCRn-DCR1)/DCR1*100%.

The testing processes for Comparative example 1 and other embodiments are the same as above. Data in Table 3 are data measured after 250 cycles under the above testing conditions.

**Test results**

The test results are shown in Table 1 to Table 3.

Table 1

| Serial number | Swelling polymer | | | | | | | | | | |
|---|---|---|---|---|---|---|---|---|---|---|---|
| | Monomer | **K** | Glass-transition temperature Tg | Crystallinity Xc | Rubber film | | | | | Shore hardness of a second swollen rubber film Ha2 | $H_{a1}/H_{a2}$ |
| | | | | | Elastic modulus Mpa | Elongation at break | Liquid absorption amount $m_2/m_1$ | Liquid releasing amount $m_3/m_2$ | Shore hardness $H_{a1}$ | | |
| Embodiment 1 | 85% vinyl acetate+15% ethylene | 0.9 | 2°C | /(There is no melting peak) | 0.75 | 100% | 2400% | 15% | 100 | 20 | 0.2 |
| Embodiment 2 | 85% vinyl acetate +15% ethylene | 0.9 | 2°C | /(There is no melting peak) | 0.75 | 100% | 2400% | 15% | 100 | 20 | 0.2 |
| Embodiment 3 | 85% vinyl acetate +15% ethylene | 0.9 | 2°C | /(There is no melting peak) | 0.75 | 100% | 2400% | 15% | 100 | 20 | 0.2 |
| Embodiment 4 | 85% vinyl acetate +15% ethylene | 0.9 | 2°C | /(There is no melting peak) | 0.75 | 100% | 2400% | 15% | 100 | 20 | 0.2 |
| Embodiment 5 | 100% ethyl acrylate | 0.6 | -10°C | /(There is no melting peak) | 0.20 | 480% | 1825% | 15% | 80 | 15 | 0.19 |
| Embodiment 6 | 60% methyl methacrylate +35% butyl acrylate +5% acrylamide | 0.9 | 12°C | /(There is no melting peak) | 0.90 | 120% | 1025% | 30% | 100 | 25 | 0.25 |
| Embodiment 7 | 80% epoxypropane +15% 2-ethylene oxide carboxylate +5% styrene | 0.8 | -5°C | /(There is no melting peak) | 0.35 | 350% | 1615% | 20% | 100 | 45 | 0.45 |
| Embodiment 8 | 88% vinyl ethyl ether +12% vinyl acetate | 0.9 | 0°C | /(There is no melting peak) | 0.65 | 180% | 1115% | 30% | 100 | 28 | 0.28 |
| Embodiment 9 | 85% vinylidene fluoride +15% perfluoropropyle ne | 2.2 | 10°C | 8% | 0.90 | 100% | 300% | 30% | 80 | 2 | 0.025 |

(continued)

| Serial number | Swelling polymer | | | | | | | | | | |
|---|---|---|---|---|---|---|---|---|---|---|---|
| | Monomer | **K** | Glass-transition temperature Tg | Crystallinity Xc | Rubber film | | | | | Shore hardness of a second swollen rubber film Ha2 | $H_{a1}/H_{a2}$ |
| | | | | | Elastic modulus Mpa | Elongation at break | Liquid absorption amount $m_2/m_1$ | Liquid releasing amount $m_3/m_2$ | Shore hardness $H_{a1}$ | | |
| Embodiment 10 | 79% vinylidene fluoride +21% perfluoropropyle ne | 3.5 | 5 | 3% | 0.8 | 120% | 975% | 30% | 80 | 0 | 0 |
| Embodiment 11 | 80% vinylidene fluoride +15% perfluoropropyle ne +5% sulfoacid monosubstituted ethylene | 2.0 | 12 | 5% | 0.91 | 105% | 1150% | 30% | 80 | 0 | 0 |
| Comparative example 1 | None | Null | Null | Null | Null | Null | Null | Null | Null | Null | Null |
| Comparative example 2 | 100% ethylene oxide | 1.6 | 7°C | 31% | 12.0 | 80% | 105% | 12% | 100 | 90 | 0.9 |

In Table 1, 85% vinyl acetate plus 15% ethylene in a monomer means that, based on a total mass of the monomer, a mass content of vinyl acetate is 85% and a mass content of ethylene is 15%. Due to changes in polymerization conditions (polymerization temperature, polymerization pressure, etc.), properties of a polymer formed by polymerization of the same type of monomers may also change, such as a change in the glass-transition temperature.

Table 2

| Serial number | Battery parameters | | | | | | | | | |
|---|---|---|---|---|---|---|---|---|---|---|
| | M1(g) | M2(g) | y/Ah | $y/V_{total}$ porosity | Free electroly te y(ml) | Capac ity/Ah | Total pores of positive and negative separators $V_{total}$ porosity(ml) | Volume m/ρ (ml) of liquid electrolyte | Content of swelling polymer of positive electrod e plate | Content of swelling polymer of negative electrod e plate |
| Embodim ent 1 | 0.00 | 0.00 | 0.00% | 0.00% | 0.00 | 150 | 260 | 300 | 0.20% | 2.50% |
| Embodim ent 2 | 0.25 | 0.05 | 0.17% | 0.10% | 0.25 | 150 | 260 | 300 | 0.10% | 2.20% |
| Embodim ent 3 | 0.50 | 0.25 | 0.33% | 0.19% | 0.50 | 150 | 260 | 300 | 0.10% | 1.50% |
| Embodim ent 4 | 0.50 | 0.5 | 0.33% | 0.19% | 0.50 | 150 | 260 | 300 | 0.00% | 0.50% |
| Embodim ent 5 | 0.00 | 0.25 | 0.00% | 0.00% | 0.00 | 150 | 260 | 300 | 0.20% | 2.50% |
| Embodim ent 6 | 0.50 | 0.25 | 0.33% | 0.19% | 0.50 | 150 | 260 | 300 | 0.20% | 2.50% |
| Embodim ent 7 | 0.40 | 0.10 | 0.20% | 0.12% | 0.30 | 150 | 260 | 300 | 0.20% | 2.50% |
| Embodim ent 8 | 0.25 | 0.05 | 0.10% | 0.06% | 0.15 | 150 | 260 | 300 | 0.20% | 2.50% |
| Embodim ent 9 | 0.00 | 0.05 | 0.00% | 0.00% | 0.00 | 150 | 260 | 300 | 0.20% | 2.50% |
| Embodim ent 10 | 0.00 | 0.05 | 0.00% | 0.00% | 0.00 | 150 | 260 | 300 | 0.20% | 2.50% |
| Embodim ent 11 | 0.00 | 0.05 | 0.00% | 0.00% | 0.00 | 150 | 260 | 300 | 0.20% | 2.50% |
| Comparati ve example 1 | 31.00 | 5.00 | 20.00 % | 11.54 % | 30 | 150 | 260 | 300 | 0.00% | 0.00% |
| Comparati ve example 2 | 26.00 | 5.00 | 16.67 % | 9.62% | 25 | 150 | 260 | 300 | 0.00% | 1.50% |

In Table 2, a content of the swelling polymer of the positive electrode plate is 0.2%, which indicates that a mass content of the swelling polymer is 0.2% based on a total mass of a positive film layer.

The amount of the swelling polymer added in the positive electrode plate is 0.0%, which indicates that no swelling polymer is added in the positive film layer.

Table 3

| Serial number | Lithium ion battery | | |
|---|---|---|---|
| | Electrical performance parameters @ 250cls. | | 200V external short failure time |
| | Capacity retention ratio | DCIR | |
| Embodiment 1 | 95.00% | 5.00% | 1.8h |
| Embodiment 2 | 94.00% | 6.00% | 40min |
| Embodiment 3 | 93.50% | 8.00% | 22min |
| Embodiment 4 | 93.00% | 10.00% | 25min |
| Embodiment 5 | 94.00% | 9.00% | 2h |
| Embodiment 6 | 92.00% | 11.00% | 23min |
| Embodiment 7 | 93.00% | 8.00% | 32min |
| Embodiment 8 | 92.00% | 11.00% | 48min |
| Embodiment 9 | 91.00% | 11.00% | 1.9h |
| Embodiment 10 | 91.00% | 11.00% | 1.9h |
| Embodiment 11 | 91.00% | 11.00% | 1.9h |
| Comparative example 1 | 90.00% | 13.00% | 2s |
| Comparative example 2 | 90.00% | 13.00% | 1s |

It can be seen from Table 3 that no swelling polymer is added into the positive electrode plate and the negative electrode plate of Comparative Example 1. During the cycle of the lithium ion battery, due to the volume change of the lithium ion battery, the electrolyte in the electrode assembly may be squeezed out, causing a liquid deficiency problem, thereby increasing the risk of occurrence of lithium dendritic crystal and degrading the use reliability and cycle performance of the lithium ion battery.

Although polyethylene oxide is added into the electrode plate in Comparative example 2, the swelling capability of the polymer is relatively low, so not only is low liquid retaining efficiency is caused, but also its own high impedance may degrade the dynamic performance of the battery.

The embodiment of the present application adds the swelling polymer to at least one of the positive electrode plate, the negative electrode plate and the separator, so the swelling polymer can lock the electrolyte and release the electrolyte during the charge and discharge process, thereby improving the liquid retaining capability of the electrode assembly and the infiltration performance of the electrolyte to the electrode assembly, and thus improving the use reliability and cycle performance of the lithium ion battery.

Although illustrative embodiments have been shown and described, those skilled in the art should understand that the above embodiments should not be construed as limitations on the present application, and that changes, substitutions and modifications may be made to the embodiments without departing from the spirit, principles and scope of the present application.

## Claims

1. A battery cell, comprising an electrode assembly, wherein the electrode assembly comprises a first electrode plate, a second electrode plate and a separator, the polarity of the first electrode plate is opposite to the polarity of the second electrode plate, the separator is arranged between the first electrode plate and the second electrode plate, at least one of the first electrode plate, the second electrode plate and the separator comprises a swelling polymer, and the swelling polymer satisfies: $300\% \leq m_2/m_1 \leq 10000\%$; $m_3/m_2 \leq 50\%$,
wherein

the swelling polymer is prepared as a rubber film, and the rubber film has a mass of $m_1$ g, a width of 10 mm, a length of 10 mm, and a thickness of 1 mm;
the rubber film is added into an excessive amount of dimethyl carbonate (DMC), and after standing for 7 days at 25°C, a first swollen rubber film is obtained which has a mass of $m_2$ g; and
the first swollen rubber film is put in an atmosphere with a humidity less than or equal to 20%, and after standing for 7 days at 25°C, a dry rubber film is obtained which has a mass of $m_3$ g.

**2.** The battery cell according to claim 1, wherein $500\% \leq m_2/m_1 \leq 5000\%$.

**3.** The battery cell according to claim 1 or 2, wherein the swelling polymer satisfies at least two of the following conditions,

(1) the rubber film is subjected to a dynamic frequency scanning test at $T_m$+20°C to obtain the elastic modulus G'-loss modulus G" curve, wherein the slope of the elastic modulus G'-loss modulus G" curve is K, $0.5<K<5$, and $T_m$ represents the melting temperature of the rubber film;
(2) the crystallinity of the swelling polymer measured through a differential scanning calorimetry is Xc, $0<Xc\leq 30\%$; and
the glass-transition temperature of the swelling polymer is $T_g$, $T_g \leq 25$°C; and
(3) the elastic modulus of the rubber film is E, E≤1 MPa; and the elongation at break of the rubber film is $\varepsilon$, $\varepsilon \geq 100\%$.

**4.** The battery cell according to any one of claims 1 to 3, wherein

the rubber film is added into a preset electrolyte, and standing is performed for ≥24h at 25°C to obtain a second swollen rubber film, wherein the preset electrolyte comprises dimethyl carbonate (DMC), ethyl methyl carbonate (EMC), ethylene carbonate (EC) and lithium hexafluorophosphate ($LiPF_6$), the dimethyl carbonate, the ethyl methyl carbonate and the ethylene carbonate have the same mass, and the lithium hexafluorophosphate ($LiPF_6$) has a molar amount of 1 mol/L; and
the rubber film has a Shore hardness of $H_{a1}$, the second swollen rubber film has a Shore hardness of $H_{a2}$, and the rubber film and the second swollen rubber film satisfy: $0 \leq H_{a2}/H_{a1} \leq 0.5$, and $0 \leq H_{a2} \leq 45$.

**5.** The battery cell according to claim 4, wherein

$$0 \leq H_{a2}/H_{a1} \leq 0.45; \text{ and/or } 20 \leq H_{a1} \leq 100.$$

**6.** The battery cell according to any one of claims 1 to 5, wherein the swelling polymer comprises a fluoropolymer, and the fluoropolymer comprises at least one of a compound represented by Formula (AI) to a compound represented by Formula (AIII),

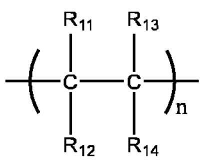 Formula (AI) and 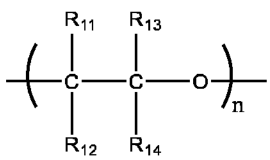 Formula (AII),

in Formula (AI) and Formula (AII), $R_{11}$, $R_{12}$, $R_{13}$and $R_{14}$ each independently comprise a hydrogen atom, a fluorine atom, a chlorine atom, a substituted or unsubstituted C1-C3 alkyl group or a substituted or unsubstituted C1-C3 alkoxy group, and at least one of $R_{11}$, $R_{12}$, $R_{13}$ and $R_{14}$ comprises a fluorine atom; when substituted, a substituent group comprises one or more of a nitrile group (-CN), a nitro group, a sulfonic acid group, a sulfonyl group, amide, a carboxyl group, an ester group, and a halogen atom;

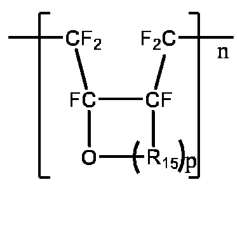 Formula (AIII);

in Formula (AIII), $R_{15}$ comprises a single bond, a substituted or unsubstituted C1-C3 alkyl group; when substituted, a substituent group comprises one or more of a nitrile group (-CN), a nitro group, a sulfonic acid group, a sulfonyl group, amide, a carboxyl group, an ester group, and a halogen atom;
p is any positive integer selected from 1 to 3; and
a polymerization degree n of the fluoropolymer is any positive integer selected from 5000 to 20000.

**7.** The battery cell according to any one of claims 1 to 6, wherein the swelling polymer comprises an ether polymer, the ether polymer comprises a compound represented by Formula (BI) and/or a compound represented by Formula (BII),

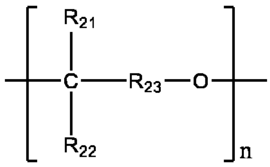
Formula (BI);

in Formula (BI), $R_{21}$ and $R_{22}$ each independently comprise a hydrogen atom, a substituted or unsubstituted C1-C3 alkyl group, or a substituted or unsubstituted C1-C3 alkoxy group; $R_{23}$ comprises a substituted or unsubstituted C1-C5 alkylene;

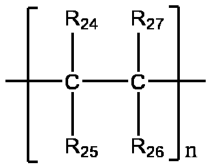
Formula (BII);

in Formula (BII), $R_{24}$ to $R_{27}$ each independently comprise a hydrogen atom, a substituted or unsubstituted C1-C3 alkyl group, a substituted or unsubstituted C1-C3 alkoxy group or ether group, and at least one of $R_{24}$ to $R_{27}$ comprises a substituted or unsubstituted C1-C3 alkoxy group or ether group;
a polymerization degree n of the ether polymer is any positive integer selected from 1500 to 25000.

**8.** The battery cell according to any one of claims 1 to 7, wherein the swelling polymer comprises an ester polymer, the ester polymer comprises a compound represented by Formula (CI) to a compound represented by Formula (CIII), and

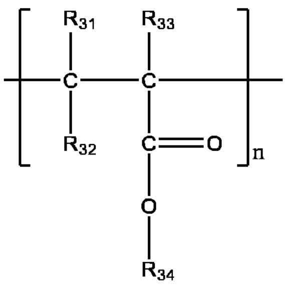
Formula (CI);

in Formula (CI), $R_{31}$, $R_{32}$ and $R_{33}$ each independently comprise a hydrogen atom, or a substituted or unsubstituted C1-C8 alkyl group; $R_{34}$ comprises a substituted or unsubstituted C1-C8 alkyl group, or a substituted or unsubstituted C1-C8 hydroxyalkyl group;

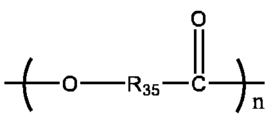
Formula (CII);

in Formula (CII), $R_{35}$ comprises a substituted or unsubstituted C2-C6 methylene;

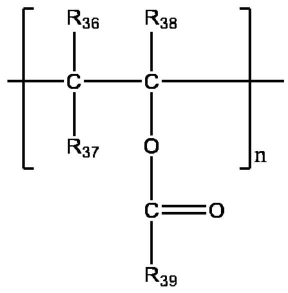

Formula (CIII),

and

in Formula (CIII), $R_{36}$, $R_{37}$ and $R_{38}$ each independently comprise a hydrogen atom, or a substituted or unsubstituted C1-C8 alkyl group; $R_{39}$ comprises a substituted or unsubstituted C1-C8 alkyl group; and a polymerization degree n of the ester polymer is any positive integer selected from 800 to 20000.

**9.** The battery cell according to any one of claims 1 to 8, wherein the swelling polymer comprises an aldehyde ketone polymer, the aldehyde ketone polymer comprises a compound represented by Formula (DI) and/or a compound represented by Formula (DII), and

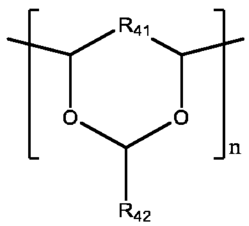

Formula (DI);

in formula (DI), $R_{41}$ comprises a single bond, and a substituted or unsubstituted C1-C6 methylene; $R_{42}$ comprises a hydrogen atom, and a substituted or unsubstituted C1-C6 alkyl group;

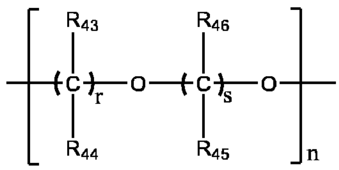

Formula (DII);

in formula (DII), $R_{43}$ to $R_{46}$ each independently comprise a hydrogen atom, a hydroxyl group, a substituted or unsubstituted C1-C3 alkyl group, a substituted or unsubstituted C1-C3 hydroxyalkyl group, or a substituted or unsubstituted C1-C3 alkoxy group; r and s each independently are integers selected from 0 to 5, and at least one of r or s is selected from any positive integer; and
a polymerization degree n of the aldehyde ketone polymer is any positive integer selected from 500 to 15000.

**10.** The battery cell according to any one of claims 1 to 9, wherein the first electrode plate comprises a current collector and a film layer arranged on at least one surface of the current collector, and the film layer comprises the swelling polymer and active substance particles.

**11.** The battery cell according to claim 10, wherein

the film layer comprises a polymer layer comprising the swelling polymer and an active substance layer comprising the active substance particles, the active substance layer is arranged on at least one surface of the current collector, and the polymer layer is arranged on a surface of the active substance layer facing away from the current collector; and/or
a plurality of active substance particles are arranged, a pore exists between every two adjacent active substance particles, and the swelling polymer is distributed in the pores.

**12.** The battery cell according to any one of claims 1 to 11, wherein the separator comprises a base material and a coating arranged on at least one surface of the base material;

the swelling polymer is distributed in the pores of the base material; and/or
the swelling polymer is distributed in the coating; and/or
the swelling polymer is arranged on a surface of the coating facing away from the base material.

**13.** The battery cell according to any one of claims 1 to 12, wherein the battery cell further comprises a liquid electrolyte, and the liquid electrolyte is located in the electrode assembly.

**14.** The battery cell according to any one of claims 1 to 13, wherein

the battery cell satisfies: $(m/\rho)/V_{total\ porosity} \geq 80\%$,
$V_{total\ porosity}$ represents a numerical value of a pore volume of the electrode assembly and has a unit of mL;
m represents a numerical value of a difference between a mass of the battery cell before drying and a mass of the battery cell after drying and has a unit of g; and
$\rho$ represents a numerical value of density of the liquid electrolyte and has a unit of g/mL.

**15.** The battery cell according to any one of claims 1 to 14, wherein the battery cell satisfies:

$0 \leq y/Ah \leq 15\%$;
y represents a numerical value of a volume of a free electrolyte in the battery cell and has a unit of mL; and
Ah represents a numerical value of a nominal capacity of the battery cell and has a unit of Ah.

**16.** The battery cell according to any one of claims 1 to 15, wherein the battery cell satisfies:

$$0 \leq y/V_{total\ porosity} \leq 15\%;$$

y represents the numerical value of the volume of the free electrolyte in the battery cell and has a unit of mL; and
$V_{total\ porosity}$ represents the numerical value of the pore volume of the electrode assembly and has a unit of mL.

**17.** The battery cell according to any one of claims 1 to 16, wherein the battery cell, after being subjected to a linear sweep frequency vibration test, is charged to a 100% state-of-charge (SOC), a hole is formed in the battery cell and arranged at a lowest position in a vertical direction, a volume of the liquid electrolyte flowing out of the battery cell is recorded as M1, and 0 mL≤M1≤0.5 mL;
wherein

a vibration direction of the linear sweep frequency vibration test is: single up-and-down vibration;
a vibration frequency of the linear sweep frequency vibration test is: 10 Hz to 55 Hz;
a maximum accelerated velocity of the linear sweep frequency vibration test is: 30 $m/s^2$;
the number of sweep frequency cycles of the linear sweep frequency vibration test is: 10; and
vibration time of the linear sweep frequency vibration test is: 3 h.

**18.** The battery cell according to claim 17, wherein the battery cell, after being subjected to the linear sweep frequency vibration test, is charged to the 100% state-of-charge (SOC), the hole is formed in the battery cell and arranged at the lowest position in the vertical direction, the volume of the liquid electrolyte flowing out of the battery cell is recorded as M1, and M1 is 0 mL.

**19.** The battery cell according to claim 17, wherein after the battery cell is subjected to the linear sweep frequency vibration test, the electrode assembly is taken out, after the electrode assembly is subjected to an extrusion test, a volume of an electrolyte flowing out of the electrode assembly is recorded as M2, and 0 mL≤M2≤0.5 mL;
wherein

an extrusion direction of the extrusion test is perpendicular to a thickness direction of the electrode assembly; and
an extrusion degree of the extrusion test is: an extrusion force being 0.35 MPa.

**20.** The battery cell according to claim 9, wherein after the battery cell is subjected to the linear sweep frequency vibration

test, the electrode assembly is taken out, after the electrode assembly is subjected to an extrusion test, a volume of an electrolyte flowing out of the electrode assembly is recorded as M2, and M2 is 0 mL.

**21.** A battery, comprising the battery cell according to any one of claims 1 to 20.

**22.** An electrical apparatus, comprising the battery according to claim 21.

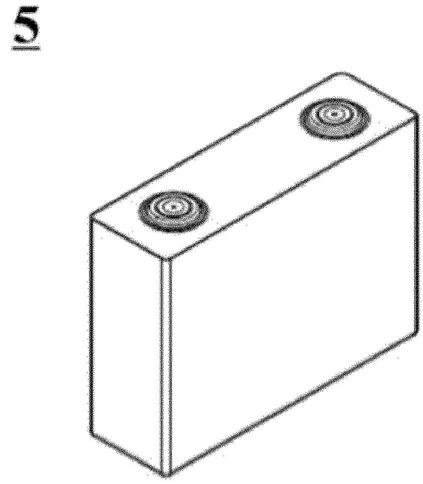


FIG. 1

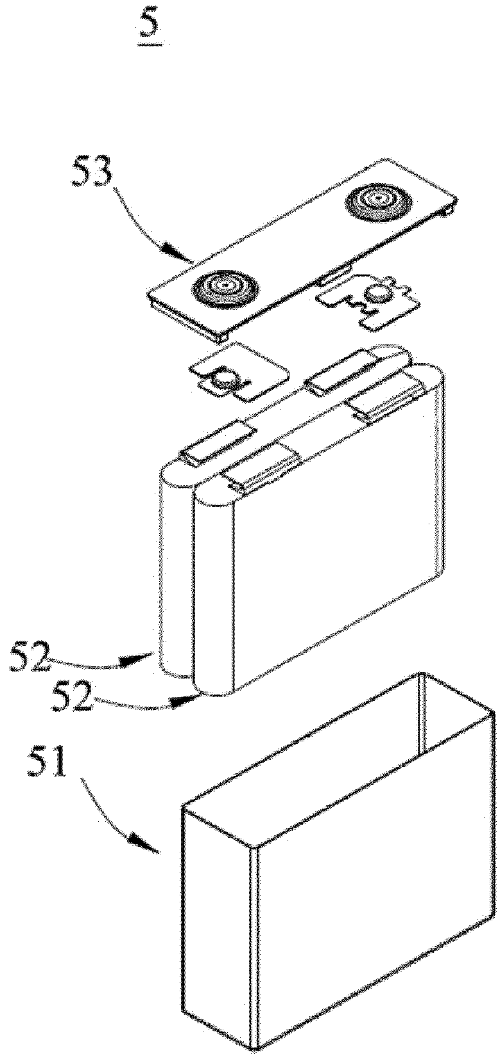


FIG. 2

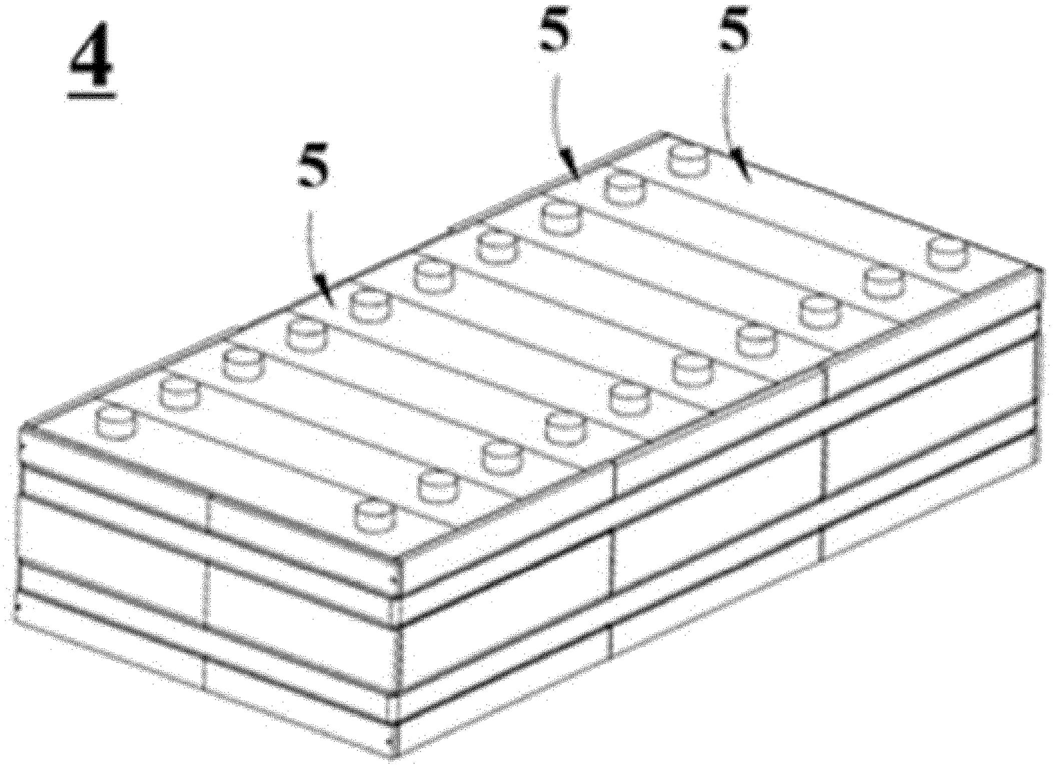


FIG. 3

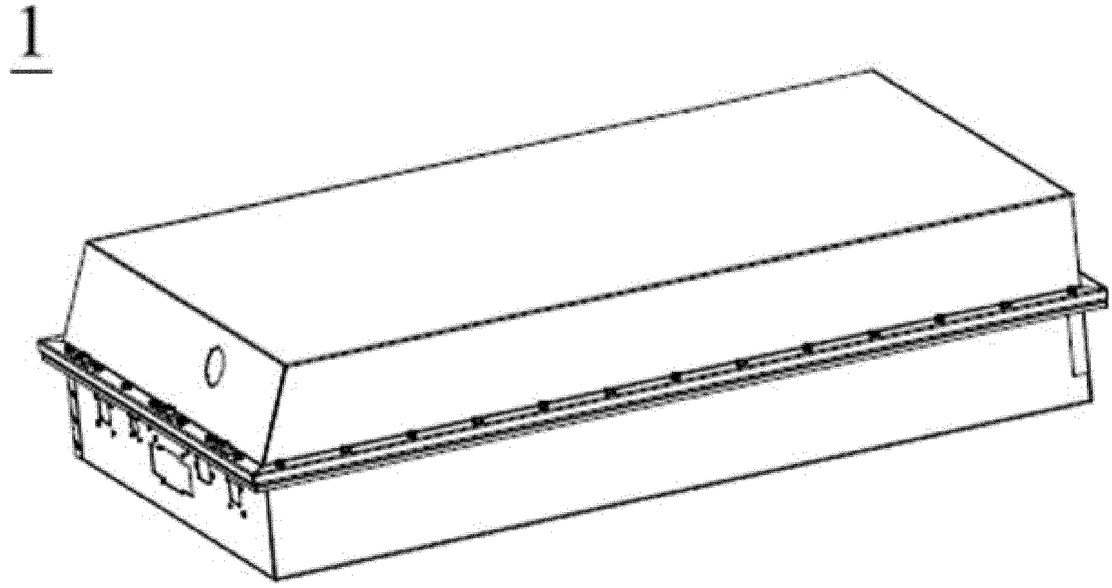


FIG. 4

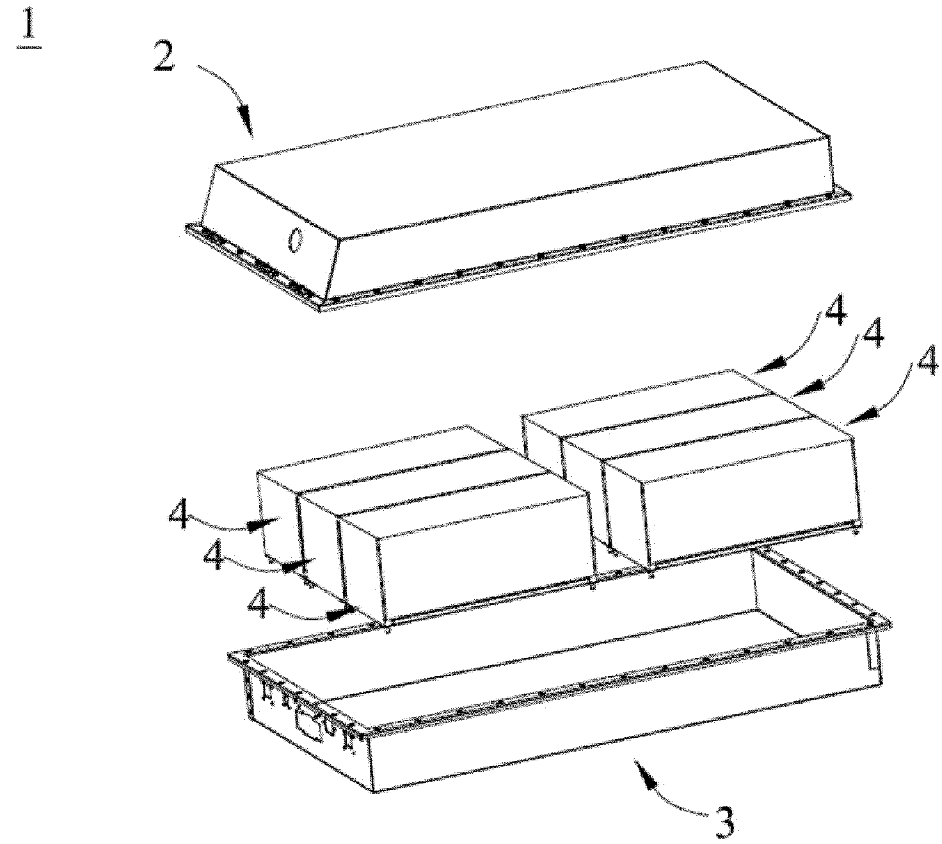


FIG. 5

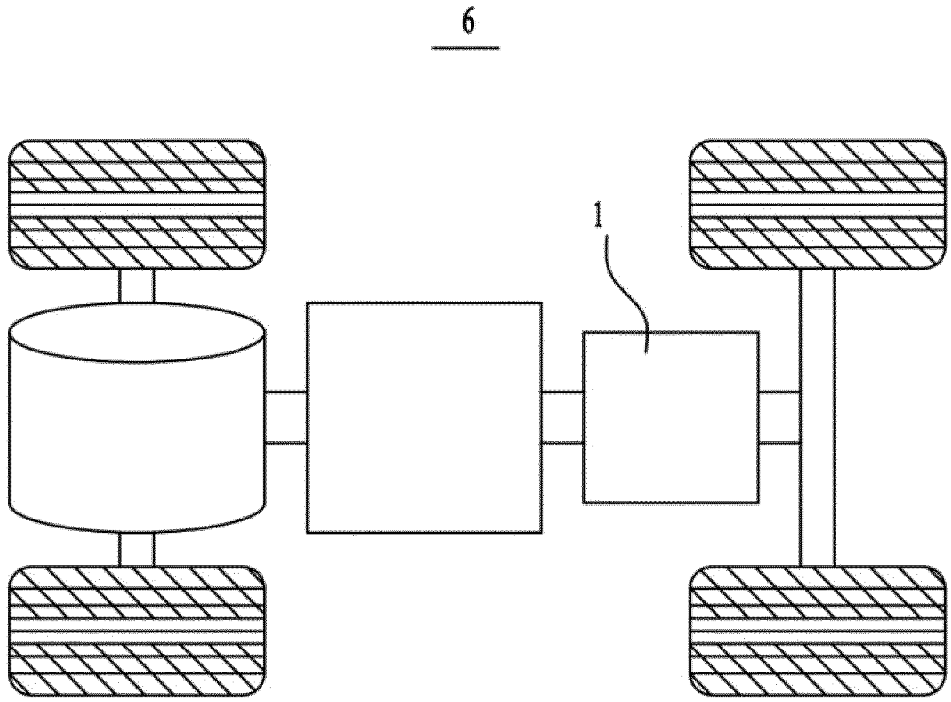


FIG. 6

## INTERNATIONAL SEARCH REPORT

International application No.
**PCT/CN2024/072427**

**A. CLASSIFICATION OF SUBJECT MATTER**

H01M50/46(2021.01)i; H01M50/414(2021.01)i; H01M10/0525(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS, CNTXT, ENTXTC, WPABSC, VEN, DWPI, USTXT, CNKI, IEEE: 胶膜, 聚合物, 溶胀, 氟代, 碳酸二甲酯, 吸液量, DMC, battery, membrane, polymer, electrolyte, infiltration, separator, anode, cathode, coat, adhesive, liquid, suction, dimethyl, carbonate, swelling

**C. DOCUMENTS CONSIDERED TO BE RELEVANT**

| Category* | Citation of document, with indication, where appropriate, of the relevant passages | Relevant to claim No. |
|---|---|---|
| A | CN 115810873 A (NINGDE CONTEMPORARY AMPEREX TECHNOLOGY CO., LTD.) 17 March 2023 (2023-03-17)<br>description, paragraphs 0042-0090 | 1-22 |
| A | CN 110951036 A (TAIYUAN UNIVERSITY OF TECHNOLOGY) 03 April 2020 (2020-04-03)<br>entire document | 1-22 |
| A | CN 114388869 A (RISESUN MGL NEW ENERGY TECHNOLOGY CO., LTD.) 22 April 2022 (2022-04-22)<br>entire document | 1-22 |
| A | CN 114646731 A (SUNWODA ELECTRIC VEHICLE BATTERY CO., LTD.) 21 June 2022 (2022-06-21)<br>entire document | 1-22 |
| A | US 2004197662 A1 (SHIROUMA SCIENCE CO., LTD. et al.) 07 October 2004 (2004-10-07)<br>entire document | 1-22 |

☑ Further documents are listed in the continuation of Box C.    ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **25 March 2024** | **28 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

**INTERNATIONAL SEARCH REPORT**

International application No.
**PCT/CN2024/072427**

**C. DOCUMENTS CONSIDERED TO BE RELEVANT**

| Category* | Citation of document, with indication, where appropriate, of the relevant passages | Relevant to claim No. |
|---|---|---|
| A | US 2013040207 A1 (GUPTA NEERAJ et al.) 14 February 2013 (2013-02-14)<br>entire document | 1-22 |

Form PCT/ISA/210 (second sheet) (July 2022)

**INTERNATIONAL SEARCH REPORT**
**Information on patent family members**

International application No.
**PCT/CN2024/072427**

| Patent document cited in search report | Publication date (day/month/year) | Patent family member(s) | Publication date (day/month/year) |
|---|---|---|---|
| CN 115810873 A | 17 March 2023 | None | |
| CN 110951036 A | 03 April 2020 | None | |
| CN 114388869 A | 22 April 2022 | None | |
| CN 114646731 A | 21 June 2022 | None | |
| US 2004197662 A1 | 07 October 2004 | US 7285360 B2 | 23 October 2007 |
| | | TW 593498 B | 21 June 2004 |
| | | JP 2003123842 A | 25 April 2003 |
| | | JP 3974371 B2 | 12 September 2007 |
| | | WO 03036656 A1 | 01 May 2003 |
| | | AU 2002363048 A1 | 06 May 2003 |
| US 2013040207 A1 | 14 February 2013 | KR 20140066163 A | 30 May 2014 |
| | | US 8796406 B2 | 05 August 2014 |
| | | EP 2742088 A1 | 18 June 2014 |
| | | EP 2742088 A4 | 01 April 2015 |
| | | WO 2013025414 A1 | 21 February 2013 |
| | | JP 2014528979 A | 30 October 2014 |
| | | CN 103732656 A | 16 April 2014 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202311457178